# EUROPEAN PATENT APPLICATION

(11) **EP 4 808 247 A1**
(43) Date of publication of application: **16.09.2026**
(21) Application number: 24896323.3
(22) Date of filing: 18.11.2024
(51) Int. Cl.: H04W 72/40

(54) **COMMUNICATION METHOD AND APPARATUS, AND STORAGE MEDIUM**

(30) Priority: 29.11.2023 CN 202311622196
(71) Applicant: Huawei Technologies Co., Ltd., Shenzhen, Guangdong 518129 (CN)
(72) Inventor: ZHANG, Yi, Shenzhen, Guangdong 518129 (CN); LIU, Yating, Shenzhen, Guangdong 518129 (CN); SU, Hongjia, Shenzhen, Guangdong 518129 (CN)
(74) Representative: Pfenning, Meinig & Partner mbB
(86) International application number: PCT/CN2024/132808
(87) International publication number: WO 2025/113232

(57) **Abstract**

A communication method and apparatus, and a storage medium are provided. The method includes: receiving first information, where the first information includes first identification information indicating a beam used by a third terminal to receive the first information from a second terminal; determining a first candidate resource set; when the first identification information is different from second identification information, excluding, from the first candidate resource set, a time-frequency resource corresponding to a slot corresponding to a first transmission resource, to obtain an excluded candidate resource set, where the second identification information is a beam used by the third terminal to receive second information from a first terminal, and the first transmission resource is a time-frequency resource indicated by the second terminal in the first information; and sending the second information to the third terminal based on the excluded candidate resource set. In this way, a probability that the first terminal and the second terminal select a transmission resource in a same slot is reduced, operations on a shared transmission resource between the first terminal and the second terminal are effectively coordinated, and communication reliability is improved.

## Description

This application claims priority to Chinese Patent Application No. 202311622196.3, filed with the China National Intellectual Property Administration on November 29, 2023 and entitled "COMMUNICATION METHOD AND APPARATUS, AND STORAGE MEDIUM", which is incorporated herein by reference in its entirety.

### TECHNICAL FIELD

This application relates to the field of communication technologies, and in particular, to a communication method and apparatus, and a storage medium.

### BACKGROUND

Cellular vehicle-to-everything (cellular vehicle-to-everything, C-V2X) is a vehicle-to-everything (vehicle-to-everything, V2X) communication technology developed based on a cellular system, and can implement low-latency and high-reliability communication between nodes in a vehicle network. In a C-V2X scenario, a connection may be established between vehicles by using a sidelink (sidelink, SL) communication technology.

In sidelink communication, one-to-many and many-to-many communication requirements may be implemented between terminals. For example, in V2X communication, each vehicle may simultaneously establish a communication connection with one or more vehicles. In an SL frequency range 2 (frequency range 2, FR2) system, transmission between terminals is performed by using directional beams. In actual application, it is found that, in an SL communication system, when one receiving terminal maintains communication with a plurality of transmitting terminals, if the receiving terminal needs to receive data from the plurality of transmitting terminals in different directions, a problem of unreliable communication often occurs, for example, a problem of frequent retransmission, packet loss, or latency.

Therefore, how to improve reliability of communication between terminals is an urgent problem to be resolved.

### SUMMARY

This application provides a communication method and apparatus, and a storage medium, to effectively coordinate operations on a shared transmission resource between terminals in a scenario in which a same terminal maintains a plurality of communication links with other terminals, to improve communication reliability.

According to a first aspect, this application provides a communication method. The method includes: receiving first information, where the first information includes first identification information, and the first identification information indicates a beam used by a third terminal to receive the first information from a second terminal; determining a first candidate resource set; when the first identification information is different from second identification information, excluding, from the first candidate resource set, a time-frequency resource corresponding to a slot corresponding to a first transmission resource, to obtain an excluded candidate resource set, where the second identification information is a beam used by the third terminal to receive second information from a first terminal, and the first transmission resource is a time-frequency resource indicated by the second terminal in the first information; and sending the second information to the third terminal based on the excluded candidate resource set.

According to the method provided in this application, based on the fact that both the first terminal and the second terminal have the third terminal as a communication destination, and reference signals used by the third terminal to separately receive information from the first terminal and the second terminal have different identification information, the first terminal excludes, from the first candidate resource set, the time-frequency resource corresponding to the slot in which the first transmission resource indicated by the second terminal is located, and sends the second information to the third terminal based on the excluded candidate resource set.

In this way, a probability that the first terminal and the second terminal select a transmission resource in a same slot is reduced, operations on a shared transmission resource between the first terminal and the second terminal are effectively coordinated, and a receiving conflict caused because the third terminal cannot separately receive information from the first terminal and the second terminal in a same slot by using beams in different directions is resolved, so that reliability of communication between terminals in sidelink communication is effectively improved.

In some possible implementations, the first identification information indicates an index of a sidelink channel state information reference signal SL CSI-RS, and the index of the SL CSI-RS corresponds to the beam used by the third terminal to receive the first information from the second terminal.

In some possible implementations, the first information further includes third identification information, the third identification information indicates that a destination end of the first information is the third terminal, the second information includes fourth identification information, and the fourth identification information indicates that a destination end of the second information is the third terminal, where the third identification information is the same as or different from the fourth identification information.

In this implementation, in different communication links established between the third terminal and different other terminals, identification information corresponding to the third terminal may be the same or different. This is applicable to constantly changing program design and effectively enhances applicability of a solution.

In some possible implementations, the first information further includes fifth identification information, and the fifth identification information indicates that a transmitting end of the first information is the second terminal.

In some possible implementations, before the excluding, from the first candidate resource set, the time-frequency resource corresponding to the slot corresponding to the first transmission resource, the method further includes: receiving third information from the third terminal, where the third information includes the third identification information and the fourth identification information, and the third information indicates all identification information of the third terminal.

In this implementation, the first terminal may more comprehensively determine, based on all the identification information of the third terminal, related information about a transmission resource whose communication destination end is the third terminal, so that a probability of excluding a conflicting resource can be increased.

In some possible implementations, the first information further includes feedback enabling information, the feedback enabling information indicates that the third terminal needs to feed back the first information sent by the second terminal, and the excluding, from the first candidate resource set, the time-frequency resource corresponding to the slot corresponding to the first transmission resource, to obtain the excluded candidate resource set includes: when the third terminal needs to feed back the second information sent by the first terminal, excluding, from the first candidate resource set, all time-frequency resources corresponding to a physical sidelink feedback channel PSFCH period indicated by the first transmission resource, to obtain the excluded candidate resource set.

In an example, that the third terminal feeds back the first information sent by the second terminal may include: performing acknowledgment feedback on data information corresponding to the first information.

In this implementation, a probability that the first terminal and the second terminal select a transmission resource corresponding to a same PSFCH period may be reduced, the operations on the shared transmission resource between the first terminal and the second terminal are effectively coordinated, and a sending conflict caused because the third terminal cannot separately send feedback to the first terminal and the second terminal in different directions in a same PSFCH period is resolved, so that the reliability of the communication between the terminals in the sidelink communication is effectively improved.

In some possible implementations, one or more pieces of information included in the first information are carried in sidelink control information SCI and/or a medium access control control element MAC CE.

Usually, one or more of a retransmission resource, a periodically reserved transmission resource, and identifiers of a receiving terminal and a transmitting terminal are carried in the SCI or the MAC CE. In the implementation provided in this application, one or more pieces of information (for example, the first identification information and the identifiers of the receiving terminal and the transmitting terminal) included in the first information are carried in the SCI or the MAC CE, so that a receiving end device can centrally receive different information (for example, the retransmission resource, the periodically reserved transmission resource, the identifiers of the receiving terminal and the transmitting terminal, and the first identification information) at a same location or at a same data layer. For example, the same location may be a same channel or same control information on the same channel, and the same data layer may be a same channel layer. In this way, receiving efficiency is improved.

In this application, any one of the first aspect and the possible implementations provided in the first aspect may be applied to the first terminal, a chip or a circuit of the first terminal, or the communication apparatus provided in the sixth aspect.

According to a second aspect, this application provides a communication method. The method includes: determining a second candidate resource set, and determining a third transmission resource from the second candidate resource set; and sending first information to a third terminal based on the third transmission resource, where the first information includes first identification information, and the first identification information indicates a beam used by the third terminal to receive the first information from a second terminal.

In this aspect, the first identification information is added to information sent by the second terminal to the third terminal, so that a first terminal whose communication destination end also includes the third terminal excludes, based on the first identification information and a first transmission resource indicated by the second terminal, a transmission resource that may cause a receiving conflict or a sending conflict of the third terminal, operations on a shared transmission resource between the first terminal and the second terminal can be effectively coordinated, and stability of an SL communication system can be improved.

In some possible implementations, the first information further includes indication information indicating the first transmission resource, the first transmission resource is a reserved resource requested by the second terminal from the third terminal, and the reserved resource includes one or both of a retransmission resource and a periodic transmission resource.

In some possible implementations, the first information further includes third identification information, and the third identification information indicates that a destination end of the first information is the third terminal. In some possible implementations, the first information further includes fifth identification information, and the fifth identification information indicates that a transmitting end of the first information is the second terminal.

In some possible implementations, the method further includes: receiving third information from the third terminal, where the third information includes the third identification information corresponding to the third terminal and fourth identification information corresponding to the third terminal, the third information indicate all identification information of the third terminal, and the third identification information is the same as or different from the fourth identification information.

In embodiments of this application, any one of the second aspect and the possible implementations provided in the second aspect may be applied to the second terminal, a chip or a circuit of the second terminal, or the communication apparatus provided in the seventh aspect.

According to a third aspect, this application provides a communication method. The method includes: sending third information to a first terminal and a second terminal, where the third information indicates all identification information of a third terminal, the third information includes third identification information corresponding to the third terminal and fourth identification information corresponding to the third terminal, and the third identification information is the same as or different from the fourth identification information.

In this aspect, the third terminal synchronizes all the identification information of the third terminal to the first terminal and the second terminal, so that the first terminal or the second terminal can more comprehensively determine, based on all the identification information of the third terminal, related information about another terminal whose communication destination end is the third terminal. In this way, the first terminal or the second terminal is assisted in improving a probability of excluding a conflicting resource.

In embodiments of this application, the communication method provided in the third aspect may be applied to the third terminal, a chip or a circuit of the third terminal, or the communication apparatus provided in the eighth aspect.

According to a fourth aspect, this application provides a communication method. The method includes: when it is determined that a first terminal needs to select a transmission resource for communication with a third terminal, determining a first candidate resource set corresponding to the first terminal; when first identification information is different from second identification information, excluding, from the first candidate resource set, a time-frequency resource corresponding to a slot corresponding to a first transmission resource, to obtain an excluded candidate resource set, where the first identification information indicates a beam used by the third terminal to receive information from a second terminal, the second identification information is a beam used by the third terminal to receive information from the first terminal, and the first transmission resource is a time-frequency resource indicated by the second terminal in first information; and sending the excluded candidate resource set to the first terminal.

In some possible implementations, the first information further includes third identification information, and the third identification information indicates that a destination end of the first information is the third terminal.

In this aspect, the third terminal excludes, for the first terminal, a transmission resource that may conflict with the second terminal, and sends the transmission resource to the first terminal. In this way, a probability that the first terminal and the second terminal select a transmission resource in a same slot can be reduced, operations on a shared transmission resource between the first terminal and the second terminal can be effectively coordinated, and reliability of communication between terminals in sidelink communication can be improved. In addition, the third terminal excludes the conflicting transmission resource for the first terminal, so that a problem that the first terminal cannot accurately exclude a conflicting resource corresponding to the first transmission resource because the first terminal cannot receive the first information (for example, the first information is not in a beam direction in which the first terminal supports to receive the first information) can be avoided, and a probability of excluding the conflicting resource can be improved. In addition, the destination end of the first information is the third terminal, and the third terminal excludes the conflicting transmission resource for the first terminal, so that the second terminal may choose not to receive the first information, to reduce communication pressure, and reduce a storage amount of information related to the first information (for example, the information related to the first information is stored in both the third terminal and the first terminal).

In some possible implementations, the first information further includes feedback enabling information, the feedback enabling information indicates that the third terminal needs to feed back the first information sent by the second terminal, and the excluding, from the first candidate resource set, the time-frequency resource corresponding to the slot corresponding to the first transmission resource includes: when the third terminal needs to feed back the second information sent by the first terminal, excluding, from the first candidate resource set, all time-frequency resources corresponding to a physical sidelink feedback channel PSFCH period indicated by the first transmission resource, to obtain the excluded candidate resource set.

In this implementation, a probability that the first terminal and the second terminal select a transmission resource corresponding to a same PSFCH period may be reduced, the operations on the shared transmission resource between the first terminal and the second terminal are effectively coordinated, and a sending conflict caused because the third terminal cannot separately send feedback to the first terminal and the second terminal in different directions in a same PSFCH period is resolved, so that the reliability of the communication between the terminals in the sidelink communication is effectively improved.

In embodiments of this application, the communication method provided in the fourth aspect may be applied to the third terminal, a chip or a circuit of the third terminal, or the communication apparatus provided in the ninth aspect.

According to a fifth aspect, this application provides a communication method. The method includes: receiving an excluded candidate resource set from a third terminal, where the excluded candidate resource set does not include a time-frequency resource corresponding to a slot corresponding to a first transmission resource, the first transmission resource is a time-frequency resource that a second terminal requests the third terminal to reserve, first identification information corresponding to the second terminal is different from second identification information corresponding to a first terminal, the first identification information indicates a beam used by the third terminal to receive first information from the second terminal, and the second identification information is a beam used by the third terminal to receive second information from the first terminal; and sending information to the third terminal based on the excluded candidate resource set.

In embodiments of this application, the communication method provided in the fifth aspect may be applied to the first terminal, a chip or a circuit of the first terminal, or the communication apparatus provided in the tenth aspect.

According to a sixth aspect, this application provides a communication apparatus. The communication apparatus includes: a first receiving unit, configured to receive first information, where the first information includes first identification information, and the first identification information indicates a beam used by a third terminal to receive the first information from a second terminal; a determining unit, configured to determine a first candidate resource set; an exclusion unit, configured to: when the first identification information is different from second identification information, exclude, from the first candidate resource set, a time-frequency resource corresponding to a slot corresponding to a first transmission resource, to obtain an excluded candidate resource set, where the second identification information is a beam used by the third terminal to receive second information from a first terminal, and the first transmission resource is a time-frequency resource indicated by the second terminal in the first information; and a sending unit, configured to send the second information to the third terminal based on the excluded candidate resource set.

In some possible implementations, the communication apparatus further includes: a second receiving unit, configured to receive third information from the third terminal, where the third information includes the third identification information and the fourth identification information, and the third information indicates all identification information of the third terminal.

In some possible implementations, the exclusion unit is specifically configured to: when the third terminal needs to feed back the second information sent by the first terminal, exclude, from the first candidate resource set, all time-frequency resources corresponding to a physical sidelink feedback channel PSFCH period in which the first transmission resource is located.

For related descriptions of the first information, the first identification information, and the second information, refer to corresponding descriptions in the method shown in any one of the first aspect or the implementations of the first aspect. Details are not described herein again.

According to a seventh aspect, this application provides a communication apparatus. The communication apparatus includes: a determining unit, configured to: determine a second candidate resource set, and determine a third transmission resource from the second candidate resource set; and a sending unit, configured to send first information to a third terminal based on the third transmission resource, where the first information includes first identification information, and the first identification information indicates a beam used by the third terminal to receive the first information from a second terminal.

According to an eighth aspect, this application provides a communication apparatus, including a unit configured to perform the method according to any one of the third aspect or the implementations of the third aspect.

According to a ninth aspect, this application provides a communication apparatus, including a unit configured to perform the method according to any one of the fourth aspect or the implementations of the fourth aspect.

According to a tenth aspect, this application provides a communication apparatus, including a unit configured to perform the method according to any one of the fifth aspect or the implementations of the fifth aspect.

According to an eleventh aspect, this application provides a communication apparatus. The communication apparatus includes a processor. The processor is configured to read and execute a computer program stored in a memory, to implement the method according to any one of the first aspect or the implementations of the first aspect, the method according to any one of the second aspect or the implementations of the second aspect, the method according to any one of the third aspect or the implementations of the third aspect, the method according to any one of the fourth aspect or the implementations of the fourth aspect, and the method according to any one of the fifth aspect or the implementations of the fifth aspect.

In some possible implementations, the communication apparatus further includes the memory. Optionally, the processor and the memory are integrated together.

In a possible implementation, the processor is configured to support the apparatus in performing a corresponding function in the foregoing communication method, and the memory is configured to store a computer program (or computer executable instructions) and/or data that are/is necessary for the apparatus.

In some possible implementations, the apparatus further includes a communication interface. The communication interface is configured to support communication between the apparatus and another network element, for example, data and/or signal sending or receiving. For example, the communication interface may be a transceiver, a circuit, a bus, a module, or another type of communication interface.

In some possible implementations, the apparatus is a chip.

According to a twelfth aspect, this application provides a communication apparatus. The apparatus includes a processor and a transceiver apparatus. The processor is coupled to the transceiver apparatus, and the processor is configured to execute a computer program or instructions to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to receive a signal from a communication apparatus other than the communication apparatus and transmit the signal to the processor, or transmit a signal from the processor to a communication apparatus other than the communication apparatus. When the communication apparatus is a chip, the transceiver apparatus is a transceiver circuit or an input/output interface.

According to a thirteenth aspect, this application provides a communication system. The system includes a first communication apparatus, a second communication apparatus, and a third communication apparatus. The first communication apparatus is configured to perform the method shown in any implementation in the corresponding first aspect of embodiments of this application, the second communication apparatus is configured to perform the method shown in any implementation in the corresponding second aspect of embodiments of this application, and the third communication apparatus is configured to perform the method shown in any implementation in the corresponding third aspect of embodiments of this application.

According to a fourteenth aspect, this application provides a communication system. The system includes a fourth communication apparatus and a fifth communication apparatus. The fourth communication apparatus is configured to perform the method shown in any implementation in the corresponding fourth aspect of embodiments of this application, and the fifth communication apparatus is configured to perform the method shown in any implementation in the corresponding fifth aspect of embodiments of this application.

According to a fifteenth aspect, an embodiment of this application provides a computer program product including instructions. When the computer program product runs on an electronic device, the electronic device is caused to perform the method shown in any implementation in a corresponding aspect of embodiments of this application.

According to a sixteenth aspect, this application provides a computer-readable storage medium. The computer-readable storage medium is configured to store a computer program, and when the computer program is executed, the method shown in any implementation in a corresponding aspect of embodiments of this application is implemented.

It may be understood that the communication apparatus, the communication system, the computer storage medium, the computer program, the computer program product, and the chip system that are provided above are all configured to perform the method shown in any implementation in a corresponding aspect of embodiments of this application. Therefore, for beneficial effects that can be achieved by the communication apparatus, the communication system, the computer storage medium, the computer program, the computer program product, and the chip system, refer to beneficial effects in a corresponding method. Details are not described herein again.

### BRIEF DESCRIPTION OF DRAWINGS

FIG. 1 is a diagram of an architecture of a communication system to which an embodiment of this application is applied;
FIG. 2 is a diagram of C-V2X according to an embodiment of this application;
FIG. 3 is a diagram of a time-frequency resource in an SL communication resource pool according to an embodiment of this application;
FIG. 4 is a diagram of a resource on which a PSFCH is located according to an embodiment of this application;
FIG. 5 is a diagram of a correspondence between a PSSCH and a PSFCH time domain resource according to an embodiment of this application;
FIG. 6 is a diagram of a resource selection window and a listening window that are determined by UE2b according to an embodiment of this application;
FIG. 7 is a diagram of beam management according to an embodiment of this application;
FIG. 8 is a diagram of an example in which communication between terminals in an SL FR2 system is performed by using directional beams according to an embodiment of this application;
FIG. 9 is a diagram of an example of a scenario in which a receiving conflict occurs on a UE1 side because transmission resources selected by UE2a and UE2b belong to a same slot according to an embodiment of this application;
FIG. 10 is a diagram of an example of a scenario in which a sending conflict occurs on a UE1 side because PSFCH periods indicated by transmission resources selected by UE2a and UE2b are the same according to an embodiment of this application;
FIG. 11 is a diagram of a relationship between a terminal and a network coverage area according to an embodiment of this application;
FIG. 12 is a schematic flowchart of a communication method according to an embodiment of this application;
FIG. 13A is a diagram of an example of a scenario in which UE1 corresponds to same identification information in different communication links according to an embodiment of this application;
FIG. 13B is a diagram of an example of a scenario in which UE1 corresponds to different identification information in different communication links according to an embodiment of this application;
FIG. 14 is a diagram of an example in which UE2b excludes all time-frequency resources in a slot in which UE2a is located according to an embodiment of this application;
FIG. 15 is a schematic flowchart of another communication method according to an embodiment of this application;
FIG. 16 is a diagram of an example in which UE2b excludes all time-frequency resources corresponding to a PSFCH period indicated by UE2a according to an embodiment of this application;
FIG. 17 is a diagram of a structure of a communication apparatus according to an embodiment of this application;
FIG. 18 is a diagram of a structure of another communication apparatus according to an embodiment of this application; and
FIG. 19 is a diagram of a structure of another communication apparatus according to an embodiment of this application.

### DESCRIPTION OF EMBODIMENTS

The following describes embodiments of this application with reference to the accompanying drawings in embodiments of this application.

Embodiments of this application may be applied to various communication systems, for example, a long term evolution (long term evolution, LTE) system, a 5th generation (5th generation, 5G) communication system, and a future 6th generation (6th generation, 6G) communication system.

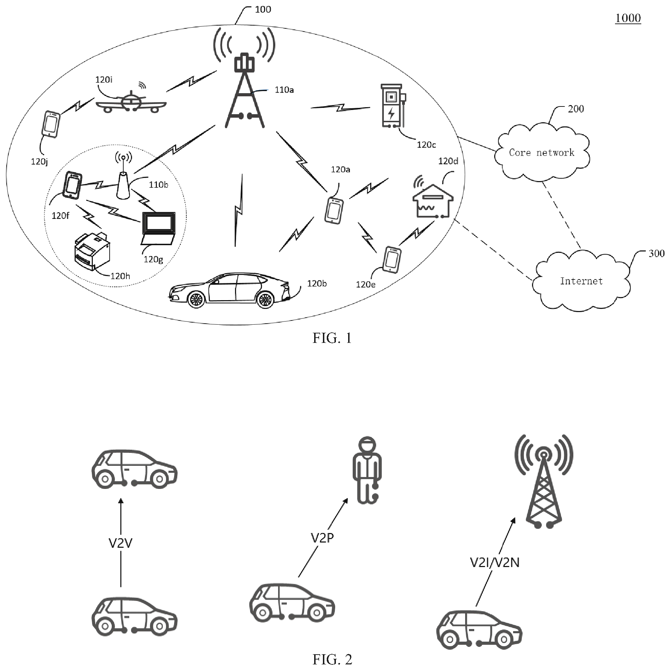

FIG. 1 is a diagram of an architecture of a communication system to which an embodiment of this application is applied. As shown in FIG. 1, the communication system 1000 includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include another network device, for example, may further include a wireless relay device and a wireless backhaul device, which are not shown in FIG. 1.

The radio access network device (for example, 110a and 110b in FIG. 1) may be a network device (base station), an evolved network device (evolved NodeB, eNodeB), a transmission reception point (transmission reception point, TRP), a next generation network device (next generation NodeB, network device) in a fifth generation (5th generation, 5G) mobile communication system, a next generation network device in a sixth generation (6th generation, 6G) mobile communication system, a network device in a future mobile communication system, an access node in a Wi-Fi system, or the like, or may be a module or unit that completes some functions of the network device, for example, may be a central unit (central unit, CU), or may be a distributed unit (distributed unit, DU). The radio access network device may be a macro network device (for example, 110a in FIG. 1), may be a micro network device or an indoor base station (for example, 110b in FIG. 1), or may be a relay node, a donor node, or the like. Neither of a specific technology and a specific device form that are used by the radio access network device is limited in embodiments of this application.

The terminal may also be referred to as a user equipment (user equipment, UE), a terminal device, a mobile station (mobile station, MS), a mobile terminal (mobile terminal, MT), or the like. Alternatively, the terminal is a device configured to provide voice or data connectivity for a user, or may be an internet of things device. For example, the terminal is a vehicle-mounted device, a handheld device, or the like having a wireless connection function. In this application, the terminal may be any terminal that can be used in a sidelink communication system. For example, currently, the terminal may be a vehicle-mounted device (for example, a car, a bicycle, an electric vehicle, an airplane, a ship, a train, or a high-speed railway), a satellite terminal, a virtual reality (virtual reality, VR) device, an augmented reality (augmented reality, AR) device, a smart point of sale (point of sale, POS) machine, a customer-premises equipment (customer-premises equipment, CPE), a wireless terminal in industrial control, a smart home device (for example, a refrigerator, a television, an air conditioner, or an electric meter), a smart robot, a robotic arm, a workshop device, a wireless terminal in self driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. Alternatively, the terminal may be a vehicle apparatus, for example, an entire vehicle apparatus, a vehicle-mounted module, a vehicle-mounted chip, an on board unit (on board unit, OBU), or a vehicle-to-everything telematics box (telematics box, T-BOX). Alternatively, the terminal may be another device that has a terminal function. For example, the terminal may alternatively be a device that functions as a terminal in device-to-device (device-to-device, D2D) communication.

The network device and the terminal may be at fixed locations, or may be movable. The network device and the terminal may be deployed on land, including indoor or outdoor and handheld or vehicle-mounted, may be deployed on water, or may be deployed on an airplane, a balloon, and a satellite in the air. Application scenarios of the network device and the terminal are not limited in embodiments of this application.

Roles of the network device and the terminal may be relative. For example, a helicopter or an uncrewed aerial vehicle 120i in FIG. 1 may be configured as a mobile network device. For the terminal device 120j that accesses the radio access network 100 via 120i, the terminal 120i is a network device. However, for the network device 110a, 120i is a terminal, that is, 110a and 120i communicate with each other according to a radio air interface protocol. It is clear that 110a and 120i may alternatively communicate with each other according to an interface protocol between network devices. In this case, for 110a, 120i is also a network device. Therefore, both the network device and the terminal may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal.

Communication between the network device and the terminal, between network devices, or between terminals may be performed through a licensed spectrum, or may be performed through an unlicensed spectrum, or may be performed through both a licensed spectrum and an unlicensed spectrum. Communication may be performed through a spectrum below 6 gigahertz (gigahertz, GHz), or may be performed through a spectrum above 6 GHz. Alternatively, communication may be performed through both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as the smart grid, the industrial control, the intelligent transportation, and the smart city. The function of the terminal may alternatively be performed by a module (for example, a chip or a modem) in the terminal, or may be performed by an apparatus including the function of the terminal.

In this application, the network device sends a downlink signal or downlink information to the terminal, where the downlink information is carried on a downlink channel; and the terminal sends an uplink signal or uplink information to the network device, where the uplink information is carried on an uplink channel. To communicate with the network device, the terminal needs to establish a wireless connection with a cell controlled by the network device. The cell that establishes the wireless connection with the terminal is referred to as a serving cell of the terminal. When communicating with the serving cell, the terminal is further interfered by a signal from a neighboring cell.

In an example, a communication method provided in embodiments of this application may be specifically applied to C-V2X.

The C-V2X is a V2X communication technology developed based on a cellular system. The C-V2X utilizes and enhances current cellular network functions and elements to achieve low-latency and high-reliability communication between various nodes in a vehicle network. FIG. 2 is a diagram of C-V2X according to an embodiment of this application. The C-V2X includes vehicle to vehicle (vehicle to vehicle, V2V) communication, vehicle to pedestrian (vehicle to pedestrian, V2P) communication, vehicle to infrastructure (vehicle to infrastructure, V2I) communication, and vehicle to network (vehicle to network, V2N) communication. As the cellular system evolves from LTE to 5G, the C-V2X also evolves from LTE-V2X to NR-V2X (new radio V2X).

V2X communication has great potential in reducing vehicle collision accidents, and therefore can reduce a quantity of casualties. Advantages of V2X are not limited to improving safety. A vehicle that can perform V2X communication helps better perform traffic management, to further promote green traffic and lower energy consumption. An intelligent transportation system (intelligent transportation system, ITS) is an application that combines the V2X. Based on a V2X technology, a vehicle user (vehicle UE, V-UE) can send, to a surrounding V-UE, some information of the vehicle user, for example, periodic information such as a location, a speed, and an intention (turning, lane change, and reversing) and information triggered by some aperiodic events. Similarly, the V-UE also receives information from a surrounding user in real time. 5G NR V2X can support lower transmission latency, more reliable communication transmission, higher throughput, and better user experience, thereby meeting requirements of more extensive application scenarios. Further, a vehicle-to-vehicle communication technology supported by the V2X may be extended and applied to D2D communication in any system.

In a C-V2X scenario, sidelink communication may be performed between terminals. To be specific, direct communication may be performed between the terminals without forwarding by a network device. In this case, a link through which the terminals are directly connected to each other is referred to as a sidelink.

Usually, in a sidelink communication technology, the terminals may perform information direct connection over a PC5 interface between the terminals. This technology can provide information exchange not only in a service coverage area of the network device, but also in a place without coverage of the network device. A terminal that is authorized to perform special communication may use an SL communication manner. Certainly, SL communication may be used to transmit service data of the intelligent transportation, or may be used to transmit a mobile internet service. This is not limited in this application.

It should be noted that the communication method provided in this application is applicable to any direct communication (including a D2D scenario) between terminals. That the communication method provided in this application is applicable to the V2X is a possible implementation, but the communication method is not limited to the V2X scenario. For example, the communication method may be further applied to scenarios such as relay (relay) and cooperation (cooperation) between terminals.

The following describes resource configuration and pre-configuration in the SL communication.

In this application, both the configuration and the pre-configuration may be used. The configuration means that a network device or a server sends configuration information of some parameters or values of parameters to a terminal via a message or signaling, so that the terminal determines a parameter for communication or a resource for transmission based on the values or the information. The pre-configuration is similar to the configuration. The pre-configuration may be a manner in which a network device or a server sends parameter information or values to a terminal through a carrier or another link different from a sidelink; or may be a manner in which a corresponding parameter or parameter value is defined, or a related parameter or value is written into a terminal in advance. This is not limited in this application. Further, these values and parameters may be changed or updated.

In an example, within a network coverage area, a terminal apparatus may obtain SL resource pool (resource pool) configuration information and/or SL bandwidth part (bandwidth part, BWP) configuration information by receiving a system information block (system information block, SIB) of the network device, cell-specific (cell-specific) radio resource control (radio resource control, RRC) signaling, or user-specific (UE-specific) RRC signaling of the terminal apparatus. Alternatively, the terminal apparatus may use pre-configured SL resource pool configuration information or SL BWP configuration information. The SL BWP configuration information may include SL resource pool information that is for configuring a quantity of resource pools included in a BWP. The SL BWP configuration information may include SL bandwidth information that indicates a size of a bandwidth for SL communication, for example, indicates that an SL bandwidth is 20 megahertz (MHz).

The following describes physical channels related in the SL communication.

A physical sidelink control channel (physical sidelink control channel, PSCCH) is used to carry sidelink control information (sidelink control information, SCI);

A physical sidelink shared channel (physical sidelink shared channel, PSSCH) is used to carry at least one of control information, data, and sidelink channel state information (channel state information, CSI) feedback information.

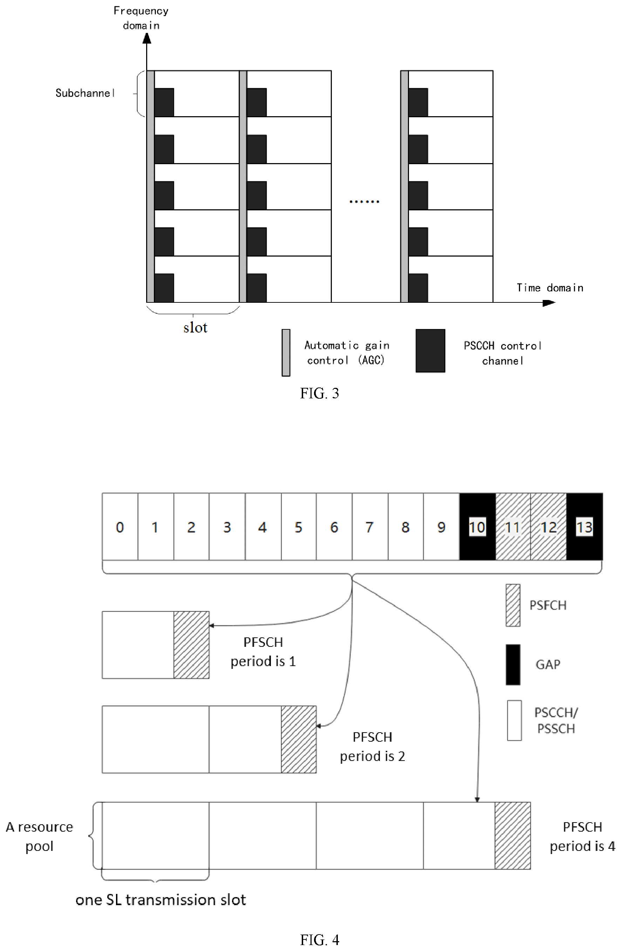

SCI of an NR SL system is classified into 1^{st}-stage SCI and 2^{nd}-stage SCI. The PSCCH is used to carry the 1^{st}-stage SCI, and the 1^{st}-stage SCI is used to schedule the 2^{nd}-stage SCI and a PSSCH. Because an SL is a distributed system, all UEs can decode the 2^{nd}-stage SCI and the PSSCH only after correctly decoding the 1^{st}-stage SCI. However, to reduce complexity of blind detection (blind decoding) performed by the UE on the PSCCH, a resource location of the PSCCH is fixed, and format information of the carried 1^{st}-stage SCI is also unique. In other words, the UE does not need to blindly detect a time-frequency resource location of the PSCCH, and also does not need to blindly detect SCI in different formats, and the UE may detect, at a fixed time-frequency resource location of the PSCCH, whether there is the 1^{st}-stage SCI. Automatic gain control (automatic gain control, AGC) and a PSCCH may exist in each subchannel in each slot. To be specific, a time domain start location of a PSCCH is a 2^{nd} symbol used for SL transmission in each slot, and a length of the PSCCH is two or three symbols (determined by resource pool configuration information); and a frequency domain location of the PSCCH is a minimum physical resource block index (PRB index) of each subchannel, and a length of the PSCCH is at least ten physical resource blocks (physical resource blocks, PRBs) (determined by the resource pool configuration information) but does not exceed a size of the subchannel, as shown in FIG. 3.

A frequency domain resource configuration (Frequency resource assignment) field and a frequency domain resource configuration (Time resource assignment) field in the 1^{st}-stage SCI respectively indicate a frequency domain resource and a time domain resource for transmission of the PSSCH, and a resource reservation period (Resource reservation period) field indicates a periodically reserved resource for transmission of the PSSCH. A value of the resource reservation period field is configured by the network device, pre-configured by the network device, or predefined. For example, the value may be indicated via first RRC signaling, and the first RRC signaling may be used to determine sl-ResourceReservePeriod1. A format of the 2^{nd}-stage SCI is indicated by a 2^{nd}-stage SCI format (2^{nd}-stage SCI format) field in the 1^{st}-stage SCI.

A physical sidelink feedback channel (physical sidelink feedback channel, PSFCH) is used for sidelink feedback information, where the sidelink feedback information may include acknowledgement feedback information for data information (including a hybrid automatic repeat request (hybrid automatic repeat request, HARQ)), for example, an acknowledgment (acknowledgement, ACK) or a negative acknowledgment (negative acknowledgement, NACK), may further include CSI feedback information, and may further indicate at least one of the following information: energy saving information and resource assistance information (including a resource recommended for use, a resource not recommended for use, a resource conflict, a resource reservation conflict, a half-duplex conflict that has occurred in the past or is to occur in the future, and the like).

A physical sidelink broadcast channel (physical sidelink broadcast channel, PSBCH) is used to carry information related to sidelink synchronization and the like.

A channel state information reference signal (CSI reference signal, CSI-RS) is an important reference signal used to measure channel quality.

A time-frequency resource for the SL communication is configured by using an SL communication resource pool. The SL communication resource pool may be considered as a set of time domain resources and frequency domain resources used for the SL communication. For a time domain resource, the network device uses a bitmap (bitmap) and periodically repeats the bitmap to indicate all subframes in a system, to indicate a time domain resource set of a subframe used for the SL communication.

For a frequency domain resource in the SL communication resource pool, the network device divides a frequency band used for the SL communication into several subchannels, and each subchannel includes a specific quantity of resource blocks. One SL transmission may occupy one or more subchannels. When an SL communication resource is scheduled, scheduling in frequency domain is performed at a granularity of subchannel.

NR-V2X supports HARQ-ACK feedback at a physical layer. To be specific, for one PSSCH transmission, if a transmitting terminal includes HARQ-ACK feedback enabling information in control information, a receiving terminal may feed back corresponding ACK/NACK information based on a current PSSCH decoding result. The ACK/NACK information is transmitted through the PSFCH channel. A PSFCH channel resource is a periodic resource configured in a resource pool, and a period configuration parameter ${N}_{PSSCH}^{PSFCH}$ of the PSFCH channel resource may be 0, 1, 2, or 4. ${N}_{PSSCH}^{PSFCH} = 0$ indicates that there is no PSFCH resource configuration in the resource pool, and PSFCH sending is not enabled in the resource, that is, the HARQ feedback at the physical layer is not supported. ${N}_{PSSCH}^{PSFCH} = 1 , 2 , 4$ indicates that there is one PSFCH feedback slot in every ${N}_{PSSCH}^{PSFCH}$ SL slots in a time window. As shown in FIG. 4, in a slot in which a physical resource of the PSFCH is located, the PSFCH occupies last two symbols before a last gap (GAP).

The following describes a resource allocation mode over a PC5 interface in the SL communication.

In the V2X, a network device may configure a resource pool for SL communication of a V2X terminal, and the resource pool is a set of time-frequency resources.

Two resource allocation modes over the PC5 interface are as follows: a mode 1 (mode 1) and a mode 2 (mode 2).

In the mode 1, when a UE is within a network coverage area, a network device may allocate a transmission resource to the V2X UE over a Uu interface. For example, an SL spectrum resource may be shared with an uplink communication resource.

In the mode 2, a terminal may sense, in a (pre-)configured resource pool, resources that are not used by another terminal, and select an appropriate quantity of such resources for transmission of the terminal. The V2X UE supports a resource sensing (sensing) process and a resource selection or reselection process in the mode 2. In the sensing process, SCI information of another terminal or another SL measurement result may be demodulated, and demodulated SCI information reflects a resource usage in an SL. In the resource selection or reselection process, a resource used for SL transmission may be determined based on a result of the foregoing sensing process.

In the SL communication, the mode 1 and the mode 2 may be allocated to different resource pools, or may share a resource pool. Resource pool sharing can improve resource utilization, but may easily cause a conflict between the mode 1 and the mode 2. Therefore, the UE in the mode 1 notifies the UE in the mode 2 of a resource allocated for future transmission.

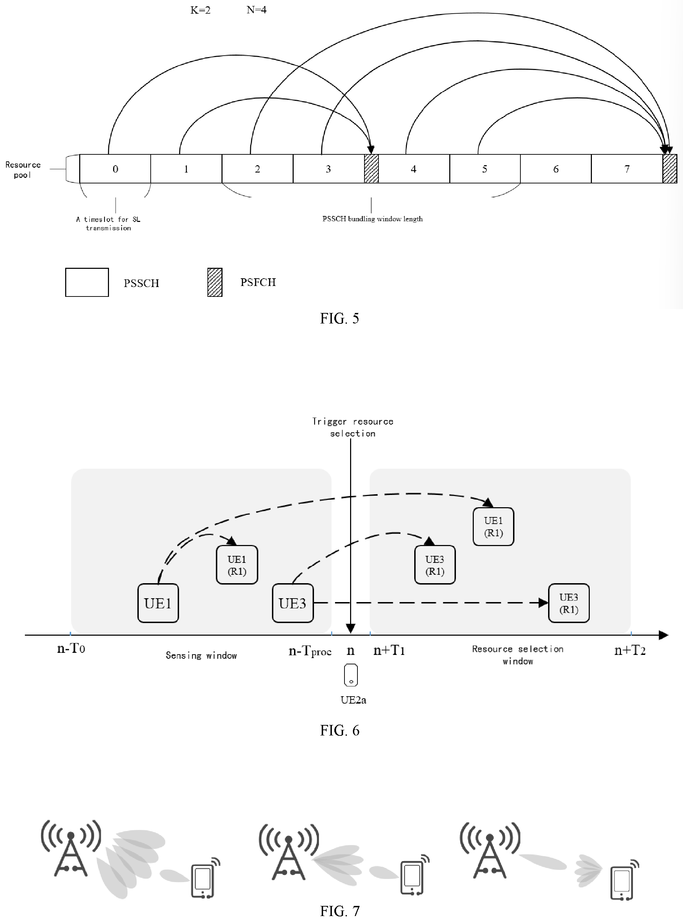

If a PSFCH feedback resource is configured in the resource pool, the PSFCH feedback resource is configured once every N slots. In a scenario of a V2X transmission mode 2, different from network device scheduling, the terminal needs to select a PSSCH sending resource based on a listening result of the terminal. Therefore, to simplify a PSFCH resource selection process, the NR-V2X configures a PSFCH feedback resource for each PSSCH subchannel. A specific process of determining the PSFCH resource corresponding to each subchannel is as follows:
1. A bitmap (bitmap) of a PSFCH frequency domain resource is configured in the resource pool, to indicate whether a specific PRB on a frequency domain resource in which the resource pool is located can be used as a PSFCH resource. To be specific, a length of bit information included in the bitmap is equal to a quantity of PRBs in the resource pool. 1 in the bitmap indicates that a corresponding PRB can be used for PSFCH transmission, and a bit 0 indicates that a corresponding PRB resource cannot be used for PSFCH transmission. The leftmost bit of the bitmap is a smallest PRB index in the resource pool. Particularly, a PSFCH resource may be used for HARQ-ACK transmission, and a resource thereof is represented by an sl-PSFCH-RB-Set bitmap. A bit 1 in the bitmap indicates that a corresponding PRB resource can be used for HARQ-ACK feedback. In addition, the PSFCH resource may also indicate a conflict in an inter-user coordination (inter-UE coordination, IUC) Scheme2 mode, and a resource thereof is represented by a bitmap corresponding to sl-RB-SetPSFCH. In the bitmap, 1 indicates that a corresponding PRB resource can indicate a conflict in Scheme2. It should be noted that a location at which a bit value is 1 in sl-PSFCH-RB-Set does not overlap a location at which a bit value is 1 in sl-RB-SetPSFCH.
2. Because every N PSSCH slots correspond to one PSFCH feedback slot, for a resource pool including N_{subch} subchannels, a quantity of RBs of a PSFCH feedback resource corresponding to each subchannel is ${M}_{subch , slot}^{PSFCH} = {M}_{PRB , set}^{PSFCH} / \left({N}_{subch}⋅{N}_{PSSCH}^{PSFCH}\right)$, where ${M}_{PRB , set}^{PSFCH}$ represents a quantity of PRBs of a PSFCH frequency domain resource, that is, indicates a total quantity of bits whose value is 1 in the bitmap of the PSFCH frequency domain resource.
3. Considering a limitation of a decoding capability of the receiving terminal, a receiving terminal cannot immediately perform feedback after receiving a PSSCH. Therefore, a PSSCH feedback time interval K is defined in the standard. To be specific, the PSSCH transmits a PSFCH in a 1^{st} available slot including a PSFCH resource. The slot and a slot in which the PSSCH is located are spaced by at least K slots, and a value of K is configured by the resource pool. FIG. 5 is a diagram of a correspondence between a PSSCH and a PSFCH time domain resource according to an embodiment of this application. When there is one PSFCH feedback slot in every four SL slots, and K = 2, PSSCHs carried in slots 0 and 1 may be fed back on a PSFCH resource in a slot 3, and PSSCHs carried in slots 2/3/4/5 are fed back on a PSFCH resource in a slot 7. In addition, because the slots 2/3/4/5 are fed back on the PSFCH resource in one slot, the slots 2/3/4/5 may be referred to as a PSSCH bundling window length.
4. Available PSFCH resources in a PSFCH feedback slot are sequentially allocated, in a manner of time domain first and then frequency domain, to each subchannel in a feedback period. FIG. 5 is a diagram of PSFCH frequency domain resource allocation according to an embodiment of this application. When ${N}_{PSSCH}^{PSFCH} = 4$, a PSFCH resource corresponding to each subchannel in four bundled PSSCH slots is a PSFCH feedback resource of one PRB allocated to each subchannel in each slot. Expressed by a formula, for an i^{th} slot in the N bundled PSSCH slots, if a frequency domain subchannel number in a resource pool of the i^{th} slot is j, a PSFCH resource corresponding to the i^{th} slot is $\left[\left(i+j⋅{N}_{PSSCH}^{PSFCH}\right)⋅{M}_{subch , slot}^{PSFCH},\left(i+1+j⋅{N}_{PSSCH}^{PSFCH}\right)⋅{M}_{subch , slot}^{PSFCH}-1\right]$. If a user occupies two subchannels for transmission, for example, PSSCHs 5 and 9 in the figure, PSFCH resources corresponding to the PSSCHs are also 5 and 9 respectively, and are non-contiguous in frequency domain.

For PSFCH feedback a NACK and a NACK form a pair, and both are represented by different orthogonal sequences, namely, code domains. A valid pair quantity may be configured by using a parameter, and is numMaxCSPair = {1, 2, 3, 4, 6}, and a maximum of {2, 4, 6, 8,12} pieces of information corresponding to the valid pair quantity may be fed back.

In an example, in V2X SL, in the mode 2, obtaining of a transmission resource of a transmitting terminal does not depend on a network device. The transmitting terminal may autonomously select, in a resource selection window based on a sensing result in a sensing window of the transmitting terminal, a transmission resource for communication.

It is assumed that a UE (for example, UE2b) triggers resource selection in a slot n. Specifically, a resource selection window and a listening window that are determined by UE2b may be shown in FIG. 6. R1 and R2 are retransmission resources indicated by a frequency resource assignment field and a time resource assignment field, and P is a periodic transmission resource indicated by the resource reservation period field. Steps of a resource selection procedure may include but are not limited to the following steps.

Step 1: Determine a candidate resource set R_{x,y} in units of one slot and L_{subCH} contiguous subchannels, where a resource selection window corresponding to R_{x,y} is [n + T₁, n + T₂], $0 \leq {T}_{1} \leq {T}_{proc , 1}^{SL} , { T}_{proc , 1}^{SL}$ is determined by using Table 1, µ_{SL} is a configured subcarrier spacing, and T₁ is selected based on an implementation. If T₂ₘᵢₙ (higher layer configuration) is less than a remaining PDB (packet latency), T₂ₘᵢₙ ≤ T₂ ≤ PDB (packet latency), and T₂ is selected based on an implementation. If T₂ₘᵢₙ (higher layer configuration) is not less than the remaining PDB (packet latency), T₂ is equal to the remaining PDB.

**Table 1**

| ***µ_{SL}*** | ${T}_{proc , 1}^{SL}$ [Slot] |
|---|---|
| 0 | 3 |
| 1 | 5 |
| 2 | 9 |
| 3 | 17 |

Step 2: Determine a sensing window $\left[n-{T}_{0},n-{T}_{proc , 0}^{SL}\right)$, where T₀ is configured by using a higher layer parameter, and ${T}_{proc , 0}^{SL}$ is determined by using Table 2.

**Table 2**

| ***µ_{SL}*** | ${T}_{proc , 0}^{SL}$ [Slot] |
|---|---|
| 0 | 1 |
| 1 | 1 |
| 2 | 2 |
| 3 | 4 |

Step 3: Determine a threshold Th(pᵢ, pⱼ) of reference signal received power (reference signal received power, RSRP), where the threshold of RSRP is related to a priority TX of to-be-sent data and a priority RX of reserved data indicated by received SCI, and Th(pᵢ, pⱼ) is specifically an (RX+(TX-1)*8)^{th} threshold in an RSRP threshold set configured for the resource pool.

Step 4: Initialize an available resource set S_{A} to include all time-frequency resources in the resource selection window.

Step 5: Exclude, from S_{A}, the following time-frequency resources: slots reserved for all periodic resources configured in a resource pool corresponding to a slot (a sent slot) that is not sensed in the sensing window.

Step 5a: If the time-frequency resources excluded from S_{A} are less than X % of total resources of the resource selection window, perform initialization in step 4 again.

Step 6: Continue to exclude the following time-frequency resources from S_{A}: The received 1^{st}-stage SCI is successfully decoded, a result of RSRP measurement performed on a physical layer sidelink shared channel (Physical Sidelink Shared Channel, PSSCH for short) demodulation reference signal (Demodulation Reference Signal, DMRS for short) of a time-frequency resource reserved by the received 1^{st}-stage SCI is greater than an RSRP threshold determined in step 3, and the time-frequency resource reserved by the received 1^{st}-stage SCI is within a resource selection window, including a retransmission resource indicated by the 1^{st}-stage SCI and a periodically reserved resource.

Step 7: If remaining resources in S_{A} are less than X % of total resources of the resource selection window, and a value of X % is configured by the resource pool and is related to TX, the RSRP threshold determined in step 3 is increased (increased by 3 each time) until the remaining resources in S_{A} are not less than X % of the total resources of the resource selection window, and step 4 continues to be performed.

Step 8: Report S_{A} to a higher layer (MAC layer).

Step 9: Randomly select a time-frequency resource (r₀, r₁, r₂, ...) in S_{A} to send data, perform resource re-evaluation on (r₀, r₁, r₂, ...) before sending the data, and perform, after the re-evaluation, preemption detection on the resource ( ${r}_{0}^{′} , {r}_{1}^{′} , {r}_{2}^{′} , …$) selected from S_{A}.

Specifically, the user performs resource re-evaluation and preemption detection at a moment of at least a slot m-T3 (T₃ ${T}_{proc , 1}^{SL}$), and the UE may additionally trigger, based on an implementation, resource re-evaluation and/or preemption detection before and after the slot m-T3. A manner of determining whether (r₀, r₁, r₂, ...) and ( ${r}_{0}^{′} , {r}_{1}^{′} , {r}_{2}^{′} , …$) need to be excluded is the same as that in steps 1 to 7. In addition, one of the following conditions is met: (1) An sl-PreemptionEnable parameter is provided and configured as enabled, and TX>RX. (2) The sl-PreemptionEnable parameter is provided and is not configured as enabled, and RX<pre and TX>pre are met, where pre is configured by a higher layer. If rᵢ and/or ${r}_{i}^{′}$ in (r₀, r₁, r₂, ...) and ( ${r}_{0}^{′} , {r}_{1}^{′} , {r}_{2}^{′} , …$) do/does not belong to S_{A} (in other words, rᵢ and ${r}_{i}^{′}$ are separately excluded during re-evaluation and/or preemption detection), rᵢ and/or ${r}_{i}^{′}$ are/is reselected. A slot m is a next slot to be sent, in other words, the slot m belongs to (r₀, r₁, r₂, ...) and ( ${r}_{0}^{′} , {r}_{1}^{′} , {r}_{2}^{′} , …$).

For descriptions of the resource selection procedure, refer to the protocol standard TS 38.214 8.1.4.

The following describes beam management.

The beam is a communication resource. Beams may be classified into transmit beams and receive beams. A technology for forming the beam may be a beamforming technology or another technical means. Beamforming includes transmit beamforming and receive beamforming.

A transmit beam is a beam that has a spatial directivity and that is formed by a signal sent by a transmitting terminal by using a specific beamforming weight. In an uplink direction, the transmitting terminal may be a terminal. In a downlink direction, the transmitting terminal may be a network device.

A receive beam is a beam that has a spatial directivity and that is formed by a signal received by a receiving terminal by using a specific beamforming weight. In an uplink direction, the receiving terminal may be a network device. In a downlink direction, the receiving terminal may be a terminal.

For sidelink transmission, both the transmitting terminal and the receiving terminal may be terminals.

Transmit beamforming: When a transmitting terminal having an antenna array sends a signal, a specific amplitude and phase are set on each antenna element of the antenna array, so that the sent signal has a specific spatial directivity. To be specific, the signal has high power in some directions, and has low power in some directions. A direction with highest signal power is a direction of a transmit beam. The antenna array includes a plurality of antenna elements. The additional specific amplitude and phase are a beamforming weight.

Receive beamforming: When a receiving terminal with an antenna array receives a signal, a specific amplitude and phase are set on each antenna element in the antenna array, so that a power gain of the received signal is directional. To be specific, power gains of signals received in some directions are high, and power gains of signals received in some directions are low. A direction with a highest power gain in signal reception is a direction of a receive beam. The antenna array includes a plurality of antenna elements. The additional specific amplitude and phase are a beamforming weight.

Sending a signal by using a transmit beam means sending the signal by using a beamforming weight.

Receiving a signal by using a receive beam means receiving the signal by using a beamforming weight.

Different beams may be considered as different resources. Same information or different information may be sent by using (or through) different beams. A beam pair is established based on the concept of the beam. One beam pair usually includes one transmit beam of a transmitting terminal and one receive beam of a receiving terminal. It should be noted that, if no description is provided, for sidelink communication, a transmit beam in the following is a transmit beam of a terminal, and a receive beam is a receive beam of a terminal.

In addition, that the terminal sends a signal or information to another terminal on a beam may be understood as that the terminal sends the signal or information to the another terminal by using a time-frequency resource, but sending of the signal or information is directional.

In a communication system like a 5G new radio (new radio, NR) system, both the network device and the terminal may generate one or more transmit beams and one or more receive beams. Before data is transmitted, beam alignment needs to be performed.

Beam management is an important technology proposed in 5G NR for FR2, is a process in which a network device and a UE obtain and maintain a beam set used for sending and receiving, and is a reference workflow for beamforming in a multiple input multiple output (multiple input multiple output, MIMO) system. Frequency ranges of FR1 and FR2 are defined in the following Table 3.

**Table 3**

| Frequency range name | Corresponding frequency range |
|---|---|
| FR1 | 410MHz to 7125MHz |
| FR2 | 24250MHz to 52600MHz |

Beam management includes two important functions: beam training and beam failure recovery. Beam training includes transmit beam training and receive beam training, and may be divided into three steps. FIG. 7 is a diagram of beam management according to an embodiment of this application. Operations in the steps are summarized as follows:
P-1: A network device sends a reference signal (reference signal, RS) based on a transmit beam set, where transmit beams in the set correspond to different sending directions, and a UE selects a transmit beam of the network device and a receive beam of the UE through beam measurement and feedback.
P-2: On the basis of P-1, the network device sends an RS based on a smaller transmit beam set, and the UE performs beam measurement and feedback, to improve the transmit beam of the network device.
P-3: The network device sends an RS by using a transmit beam, and the UE performs beam measurement, to improve the receive beam of the UE.

Based on the foregoing three steps, downlink beam training of 5G NR is performed. In particular, in step P-1 of the beam training, a possible RS is a synchronization signal block (synchronization signal block, SSB). Therefore, the network device configures a maximum of 64 transmit beams, where each beam corresponds to one SSB and a time-frequency resource used by the UE for feedback. The network device sequentially sends an SSB on each beam in a sweeping manner, and the UE performs measurement to obtain reference signal received power (reference signal received power, RSRP) of the SSB and performs feedback. Then, the UE selects one SSB set by comparing RSRP, and reports, to the network device on a given time-frequency resource, sequence numbers of SSBs in the set and corresponding RSRP, and the network device performs beam determination by using the reported information. To implement transmit beam training in a P-2 working state, the BS allocates K_{S} CSI-RS resources to K_{S} transmit beams, and then sends the CSI-RS resources in a periodic beam sweeping manner. In these CSI-RS resources, a maximum quantity of CSI-RS ports is 2, and other uncertain resource mapping information needs to be configured by the BS and indicated to the UE via RRC signaling. In addition, the BS sends the CSI-RS resource only in a single beam direction at a moment. The UE performs beam measurement to obtain CSI-RS reference signal received power RSRP, and obtains a CSI-RS reference signal resource indicator (CSI-RS Resource Indicator, CRI). After measuring the RSRP, the UE selects one or more RSRP values and corresponding CRIs through comparison, and reports the selected RSRP values and the corresponding CRIs to the BS on a given time-frequency resource. The BS determines, by using reported information, a transmit beam that needs to be used.

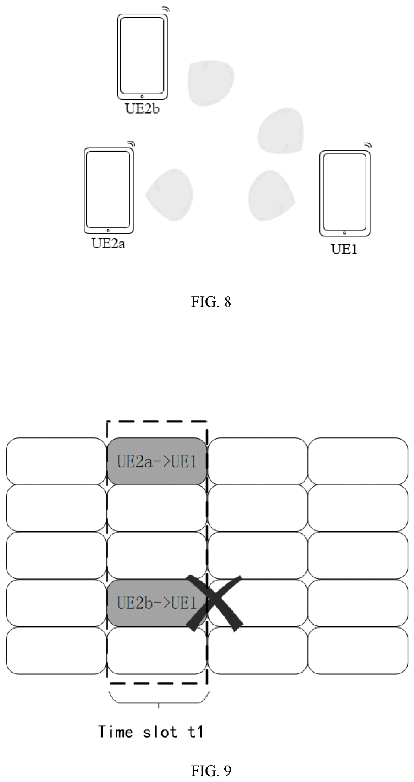

In an SL FR2 system, a directional beam is used for communication transmission between UEs. As shown in FIG. 8, corresponding beams are used for communication between UE1 and UE2a, and between UE1 and UE2b.

The SL communication system is a distributed system, and a distributed characteristic of the SL communication system allows a plurality of nodes (terminals) in the system to concurrently and independently operate some shared transmission resources. In this way, when a receiving terminal separately maintains a plurality of communication links with a plurality of transmitting terminals, the plurality of transmitting terminals may concurrently and independently operate some shared transmission resources available for communication with the receiving terminal. Consequently, the plurality of transmitting terminals inevitably select some transmission resources that may cause a communication conflict. Consequently, in a scenario in which the receiving terminal maintains a plurality of communication links, a problem of unreliable communication often occurs, for example, a problem of frequent retransmission, packet loss, or latency. How to effectively coordinate operations on a shared transmission resource between terminals and improve communication reliability becomes a key research topic of a person skilled in the art.

In this application, in actual application, it is found that, in an SL communication system, when one receiving terminal maintains communication with a plurality of transmitting terminals, if the receiving terminal needs to receive information from the plurality of transmitting terminals in different directions, a problem of unreliable communication often occurs, for example, a problem of frequent retransmission, packet loss, or latency. After further analysis, it is found that the following conflict 1 and conflict 2 may occur when the receiving terminal simultaneously maintains a plurality of transmission links with a plurality of transmitting terminals.

Conflict 1: In a slot t1, a plurality of transmitting terminals simultaneously select a same slot to send information to a same destination terminal, and the destination terminal separately receives information from the plurality of transmitting terminals in different beam directions. However, the destination terminal can receive information in only a same beam direction in a same slot, and cannot receive information in a plurality of beam directions in a same slot. In other words, a receiving conflict occurs, resulting in unreliable communication.

For example, if the destination terminal selects the target beam direction in the slot to receive data, the destination terminal cannot receive information in the slot by using the target beam direction. As a result, a packet loss may occur, or a transmitting terminal needs to resend the information. Consequently, a problem of frequent retransmission, packet loss, or latency of the information is prominent, and communication reliability between terminals in the sidelink needs to be improved.

In an example, as shown in FIG. 9, in a slot t1, transmission resources selected by UE2a and UE2b belong to a same slot, and directions of beams used by UE1 to receive information from UE2a and UE2b are different. However, UE1 can receive only information in a same beam direction in a same slot, and cannot receive two pieces of information from UE2a and UE2b in different beam directions in a same slot. Consequently, a receiving conflict occurs, and communication reliability needs to be improved.

In view of this, an embodiment of this application provides a communication solution, to effectively resolve a problem of communication instability caused by the foregoing conflict 1.

Specifically, in the communication solution, when selecting a related transmission resource that needs to be used for communication with a third terminal, and when determining that a communication destination terminal of a second terminal is also the third terminal and a beam direction of a first beam (a beam used by the third terminal to receive information from the second terminal) and a beam direction of a second beam (a beam of the second beam used by the third terminal to receive information from a first terminal) are inconsistent, the first terminal excludes, from a first candidate resource set, all time-frequency resources in a slot in which a first transmission resource indicated by the second terminal is located, and selects, based on an excluded candidate resource set, a reserved resource that needs to be used for communication with the third terminal.

In this way, operations on a shared transmission resource between the first terminal and the second terminal are effectively coordinated, and a probability of occurrence of the conflict 1 is reduced. To be specific, a probability of a receiving conflict caused because the third terminal cannot separately receive information from the first terminal and the second terminal in a same slot by using beams in different directions. In this way, reliability of communication between terminals in sidelink communication is effectively improved.

Conflict 2: In a same PSFCH period, a plurality of transmitting terminals separately send information to a same destination terminal, each of the transmitting terminals carries HARQ enabling indication information, and directions of beams separately used by the destination terminal to send feedback information to the plurality of transmitting terminals are different. However, in the same PSFCH period, the destination terminal can send the feedback information only in a same beam direction, and cannot separately send different feedback information in a plurality of beam directions simultaneously. That is, a sending conflict occurs, resulting in unreliable communication.

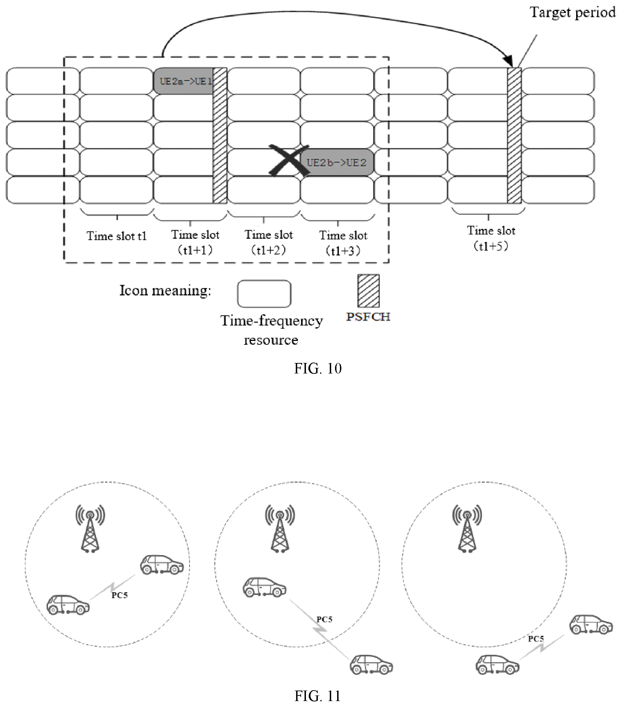

In an example, as shown in FIG. 10, an example in which a value of a time interval K of PSSCH feedback is 2 is used. PSSCHs carried in a slot t1, a slot (t1+1), a slot (t1+2), and a slot (t1+3) in a dashed box may be fed back on a PSFCH resource (for example, referred to as a target PSFCH period) in a slot (t1+5), and both a transmission resource indicated by UE2a and the transmission resource indicated by UE2b correspond to the target PSFCH period. However, UE1 can send information only in a same beam direction in a same PSFCH period, and cannot separately send information to UE2a and UE2b in a same PSFCH simultaneously by using different beam directions. Consequently, a sending conflict occurs, and communication reliability needs to be improved.

In view of this, an embodiment of this application provides another communication solution, to effectively resolve a problem of communication instability caused by the foregoing conflict 2.

Specifically, in the communication solution, when selecting a related transmission resource that needs to be used for communication with a third terminal, and when determining that a communication destination terminal of a second terminal is also the third terminal, a first beam is different from a second beam, and the third terminal needs to feed back information from the second terminal and the first terminal, the first terminal excludes, from a candidate resource set, all time-frequency resources in a PSSCH bundling window length corresponding to a PSFCH period indicated by a first transmission resource indicated by the second terminal, and selects, based on an excluded candidate resource set, a reserved resource that needs to be used for communication with the third terminal.

It should be noted that, in this implementation, in a communication link established between the third terminal and the second terminal, receive and transmit beams used by the third terminal are the same, and in a communication link established between the third terminal and the first terminal, receive and transmit beams used by the third terminal are the same. In other words, the first beam is not only a receive beam used by the third terminal to receive the information from the second terminal, but also a transmit beam used by the third terminal to send information to the second terminal. The second beam is not only a beam of the second beam used by the third terminal to receive the information from the first terminal, but also a beam used by the third terminal to send information to the first terminal.

In this way, operations on a shared transmission resource between the first terminal and the second terminal are effectively coordinated, and a probability of sending of the conflict 2 is reduced. To be specific, a probability of a sending conflict caused because the third terminal cannot separately send feedback to the first terminal and the second terminal in different directions in a same PSFCH period is reduced. In this way, reliability of communication between terminals in sidelink communication is effectively improved.

In embodiments of this application, FIG. 11 is a diagram of a relationship between a terminal and a network coverage area according to an embodiment of this application. Every two terminals that perform sidelink communication (for example, V2X communication or D2D communication) in this application may both be located in a network coverage area (as shown in the left figure of FIG. 11). One of every two terminals that perform sidelink communication may be located in a network coverage area, and the other terminal may be located outside the network coverage area (as shown in the middle figure of FIG. 11). Every two terminals that perform sidelink communication may both be located outside a network coverage area (as shown in the right figure of FIG. 11). In a case of partial network coverage or no network coverage, for a manner of determining a receive/transmit beam pair between terminals, refer to a manner of determining a receive/transmit beam pair between a network device and a terminal in FIG. 7. The manner of determining the receive/transmit beam pair between the terminals is not limited in this specification.

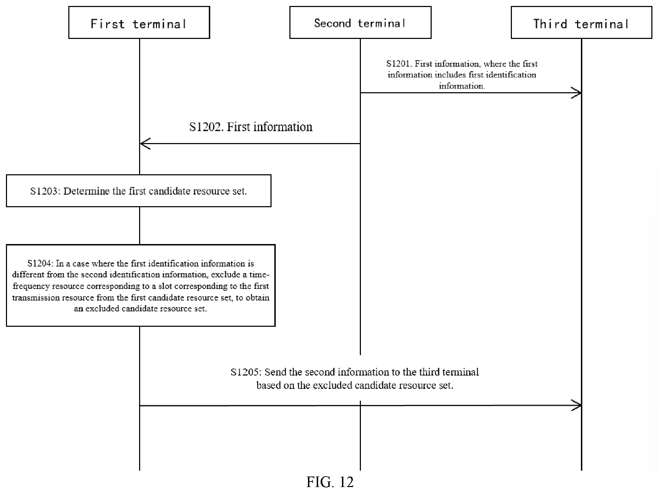

The following describes a communication method provided in this application with reference to an interaction diagram of a first terminal, a second terminal, and a third terminal shown in FIG. 12 by using an example in which the first terminal and the second terminal are transmitting terminals, and all destination terminals for communication of the first terminal and the second terminal include the third terminal. As shown in FIG. 12, the method includes the following steps.

S1201: The second terminal sends first information, where the first information includes first identification information.

In this embodiment of this application, a transmitting end of the first information is the second terminal, and a destination end of the first information is the third terminal. Correspondingly, the third terminal receives the first information. The first identification information indicates a beam used by the third terminal to receive the first information from the second terminal.

In some possible implementations, the first identification information indicates an index of an SL CSI-RS, and the index of the SL CSI-RS corresponds to the beam used by the third terminal to receive the first information from the second terminal.

For ease of description, in this specification, the beam used by the third terminal to receive the first information from the second terminal is referred to as a first beam. In an example, for a manner of determining the first beam between the third terminal and the second terminal, refer to a manner of determining receive and transmit beams between the network device and the UE shown in FIG. 7, or another beam determining manner may be used. A manner of determining a communication beam between terminals is not limited in this specification.

It should be noted that, in a first link over which the third terminal establishes communication with the second terminal, a receive beam and a transmit beam that are used by the third terminal on the first link may be the same or may be different. If the receive beam and the transmit beam that are used by the third terminal on the first link are the same, the first identification information specifically indicates a beam corresponding to the third terminal on the first link, or indicates the receive and transmit beams that are used by the third terminal on the first link.

In this embodiment of this application, the first information further includes indication information indicating a first transmission resource. The first transmission resource is a time-frequency transmission resource that the second terminal requests the third terminal to reserve. Specifically, the first transmission resource may include but is not limited to a retransmission resource and/or a periodic transmission resource. For descriptions of the retransmission resource and the periodic transmission resource, refer to related descriptions in FIG. 6. Details are not described herein again. In an example, the indication information indicating the first transmission resource is carried in 1^{st}-stage SCI, and the first terminal may specifically determine the first transmission resource based on a frequency resource assignment field, a time resource assignment field, and a resource reservation period field that are in the first SCI.

In some possible implementations, the first information further includes fifth identification information, and the fifth identification information indicates that the transmitting end of the first information is the second terminal. Specifically, the fifth identification information is one piece of identification information of the second terminal.

In some possible implementations, the first information further includes sixth identification information, and the sixth identification information indicates a beam used by the second terminal to receive information from the third terminal.

In some possible implementations, one or more pieces of information included in the first information may be carried in SCI and/or a medium access control control element (medium access control control element, MAC CE), where the SCI may include the first SCI and/or second SCI. In other words, the first information may be carried in one or more of the first-stage SCI, the second-stage SCI, and the MAC CE.

Alternatively, in another possible implementation, the first information is signaling. Specifically, the first information may be signaling used by the second terminal to perform communication transmission by using a control channel and a shared channel to request a reserved resource from the third terminal, and information (for example, one or more of the first identification information, the third identification information, the fifth identification information, and the indication information indicating the first transmission resource) included in the first information may be included in one or more of first-stage SCI in the control channel corresponding to the signaling, second-stage SCI in the shared channel corresponding to the signaling, and a MAC CE in the shared channel corresponding to the signaling.

It should be noted that bearers of all pieces of information in the first information may be completely the same, partially the same, or completely different. This is not limited in this specification. In an example, some or all of the first identification information, the third identification information, and the fifth identification information included in the first information may be simultaneously carried in one or more of the first-stage SCI, the second-stage SCI, and the MAC CE, and the indication information indicating the first transmission resource is carried in the first-stage SCI.

In addition, that the information included in the first information may be carried in one or more of the first-stage SCI, the second-stage SCI, and the MAC CE is merely some possible implementations, but the information included in the first information is not limited to these implementations. The information included in the first information may alternatively be carried in another appropriate channel or information, for example, a data channel. This is not limited in this specification.

S1202: The first terminal receives the first information from the second terminal.

In some possible implementations, the first information further includes third identification information, and the third identification information indicates that a destination end of the first information is the third terminal. Specifically, the third identification information is identification information corresponding to the third terminal in the communication link established between the second terminal and the third terminal.

In this embodiment of this application, for signaling whose destination end is not the first terminal, the first terminal may actively receive the signaling, to obtain identification information of a beam used by a device that may be used as a communication destination end of the first terminal in the future to receive information from another transmitting terminal other than the first terminal. Specifically, the first terminal actively receives the first information to obtain the first identification information. It should be noted that, in SL communication, a destination end of the first information is the third terminal, but it does not mean that the first information can be received only by the third terminal. Regardless of whether the second terminal sends the first information to the third terminal in a unicast, multicast, or broadcast manner, the first terminal in a communication range may receive the first information, and may decode corresponding control information to obtain one or more pieces of identification information specifically included in the first information. It is just that in the unicast or multicast manner, only a specific receiving terminal can decode data content carried in the shared channel.

In this embodiment of this application, there is a shared transmission resource between the first terminal and the second terminal on which operations can be independently and concurrently performed by both the first terminal and the second terminal. It may also be understood as that the first terminal and the second terminal correspond to one or more same resource pools. In a possible implementation, when determining that the first terminal and the second terminal have a same resource pool, the first terminal receives the first information sent by the second terminal.

In some possible implementations, after receiving the first information, the first terminal may store information related to the first information. Specifically, the first terminal stores a correspondence between identification information of a receiving terminal corresponding to the first information and identification information of a reference signal used by the receiving terminal to receive information from a transmitting terminal. Optionally, the correspondence may be stored in the following several manners.

Manner 1: First association information is used to record a correspondence between the identification information (destination ID, DST ID) of the receiving terminal, the identification information (DST RS index) of the reference signal used by the receiving terminal to receive the information from the transmitting terminal, and an index (transfer resource index, TRE index) of a transmission resource that the transmitting terminal requests the receiving terminal to reserve.

In other words, the first terminal stores, in the first association information, a correspondence between the third identification information (identification information of the third terminal), the first identification information, and the first transmission resource that are included in the first information.

For example, the correspondence recorded in the first association information is shown in the following Table 4. The third terminal is UE1, and the third identification information, the first identification information, and the first transmission resource are respectively a DST ID '15', a DST RS index '2', and a TRE index 'transmission resource 1 and transmission resource 2' in the first row of data in Table 4.

To help a reader more intuitively identify a related terminal body corresponding to the identification information, a corresponding mark is added in a bracket on the right of the identification information. For example, if the identification information '15' is a terminal identifier of the UE 1, the identifier of the UE 1 is added to the right of '15'. For example, if the identification information '2' is a reference signal identifier that needs to be used by the UE1 to receive information of the UE2a, an identifier (UE1<-UE2a) is added to the right side of '2'. It should be noted that, in actual storage, the content marked in the brackets is not stored in the table.

**Table 4**

| DST ID | DST RS index | TRE index |
|---|---|---|
| 15 (UE1) | 2(UE1<-UE2a) | Transmission resource 1 and transmission resource 2 |
| | 1(UE1<-UE3) | Transmission resource 3 |
| 9 (UE3) | 3 | Transmission resource 5 and transmission resource 6 |
| ... | ... | ... |

It should be noted that a slot corresponding to each transmission resource recorded in Table 4 is after a current time, and deletion processing is performed on a transmission resource that is later than the current time.

Manner 2: The second association information is used to record a correspondence between identification information (SRC ID) of the transmitting terminal, identification information (DST ID) of the receiving terminal, and identification information (DST RS index) of a reference signal used by the receiving terminal to receive information from the transmitting terminal.

In other words, the first terminal stores, in the second association information, a correspondence between the fifth identification information, the third identification information, and the first identification information that are included in the first information.

For example, a correspondence recorded in the second association information is shown in the following Table 5. The second terminal is UE2a, the third terminal is UE1, and the fifth identification information, the third identification information, and the first identification information are respectively an SRC ID '32', an DST ID '15', and an DST RS index '2' in the 1^{st} row of data in Table 5.

**Table 5**

| SRC ID | DST ID | DST RS index |
|---|---|---|
| 32 (UE2a) | 15 (UE1) | 2(UE1<-UE2a) |
| 9 (UE3) | 15 (UE1) | 1(UE1<-UE3) |
| 35 (UE4) | 9 (UE3) | 3(UE4<-UE3) |
| ... | ... | ... |

Manner 3: The first information further includes sixth identification information, and the sixth identification information indicates a beam used by the second terminal to receive information from the third terminal. For example, the third association information is used to record a correspondence between identification information of two terminals in each communication link and identification information of a reference signal used by the two terminals to receive information from each other, for example, specifically, a correspondence between identification information (one end ID, OE ID) of a first end, identification information (second end ID, SE ID) of a second end, identification information (OE RS index) of a reference signal used by the first end to receive information from the second end, and identification information (SE RS index) of a reference used by the second end to receive information from the first end.

In other words, the first terminal stores, in the third association information, a correspondence between the fifth identification information, the third identification information, the first identification information, and the sixth identification information that are included in the first information.

For example, the third association information is shown in the following Table 6. The second terminal is UE2a, the third terminal is UE1, and the fifth identification information, the third identification information, the first identification information, and the sixth identification information are respectively an OE ID '32', an OE RS index '1', an SE ID '15', and an SE RS index '2' in the 1^{st} row of data in Table 6.

**Table 6**

| OE ID | OE RS index | SE ID | SE RS index |
|---|---|---|---|
| 32 (UE2a) | 1 | 15 (UE1) | 2 |
| 9 (UE3) | 2 | 15 (UE1) | 1 |
| 35 (UE4) | 1 | 8 (UE3) | 3 |
| ... | ... | ... | |

In a possible implementation, after receiving the first information, the first terminal determines that the first information includes the indication information used to indicate the transmission resource (for example, the first transmission resource), and then stores the correspondence between the identification information of the terminal and the identification information of the reference signal that are included in the first information. It may also be understood that the first terminal records, in the first association information, the second association information, or the third association information, the correspondence between the identification information of the receiving terminal and the identification information of the reference signal that are corresponding to the first information only when determining that the second terminal requests the third terminal to reserve a resource by using the first information. In this implementation, if the information 1 sent by the second terminal to the third terminal does not indicate that a resource reservation is requested, that is, the information 1 cannot provide, for the first terminal, a reference meaning of whether a resource that may cause a sending conflict exists, the first terminal does not store information related to the information 1, so that storage overheads of invalid data can be reduced.

In the implementation of the manner 1 provided in this application, based on the manner 1, in step S1204, the first terminal may directly determine the first transmission resource based on the identification information of the third terminal in the first association information, and does not need to search the resource pool for the first transmission resource based on the identification information of the second terminal, thereby reducing program response duration and improving processing efficiency.

It may be understood that two terminals in one communication link may be a receiving end and a transmitting end of each other. In the implementation of the foregoing manner 2 provided in this application, for a case in which only one of the two terminals in the communication link requests another terminal to reserve a resource (that is, the transmitting terminal requests to receive the terminal to reserve a resource), the first terminal may not store identification information of a reference signal used by the transmitting terminal, thereby effectively reducing storage overheads. For example, in the communication link between the UE2c and the UE1, only the UE2c requests the UE1 to reserve a resource. In this case, the identification information of the reference signal used by the UE2c that is recorded in the second row of data in Table 6 may not be stored in Table 5, so that storage overheads can be reduced.

In implementation of the foregoing manner 3 provided in this application, when two terminals in a communication link request to reserve a resource from each other, the first terminal may combine two correspondences corresponding to the two terminals that are separately used as receiving terminals into one, to reduce storage overheads. For example, the 1^{st} row of data and the 3^{rd} row of data in Table 5 may be combined into the 1^{st} row of data in Table 6, so that storage overheads can be reduced.

S1203: The first terminal determines a first candidate resource set.

In an example, when the first terminal determines that the second transmission resource that needs to be used to communicate with the third terminal needs to be selected, the first terminal determines the first candidate resource set, where the second transmission resource may include a transmission resource used by the first terminal to communicate with the third terminal this time and/or a reserved resource requested by the first terminal from the third terminal based on this communication, and the reserved resource includes a retransmission resource and/or a periodic transmission resource.

In an example, the first candidate resource set determined by the first terminal may be a transmission resource set in units of one slot and L contiguous subchannels. For details about how the first terminal determines the first candidate resource set, refer to a communication protocol standard. Details are not described herein. For example, refer to related descriptions of determining the candidate resource set by the UE in the foregoing step (corresponding to step 1) of performing a resource selection procedure by the UE described in FIG. 6.

In another example, the first candidate resource set determined by the first terminal may also be a candidate resource set obtained after step 7 is performed in the foregoing resource selection procedure of the UE described in FIG. 6, or may be understood as a candidate resource set obtained in step 8. This is not limited in this specification.

In this embodiment of this application, some or all resources in the first candidate resource set determined by the first terminal are shared transmission resources that can be operated by both the first terminal and the second terminal.

S1204: When the first identification information is different from second identification information, the first terminal excludes, from the first candidate resource set, a time-frequency resource corresponding to a slot corresponding to the first transmission resource, to obtain an excluded candidate resource set.

In this embodiment of this application, the first transmission resource is a time-frequency resource indicated by the second terminal in the first information. It should be noted that the second terminal may send, to the third terminal, one or more pieces of first information that respectively indicate different first transmission resources. That the first terminal excludes, from the first candidate resource set, a time-frequency resource corresponding to a slot corresponding to the first transmission resource means that the first terminal excludes a time-frequency resource corresponding to a slot corresponding to the first transmission resource indicated in each piece of first information sent by the second terminal to the third terminal.

In this embodiment of this application, the second identification information indicates a beam used by the third terminal to receive the second information from the first terminal. Specifically, the second identification information indicates an index of a sidelink channel state information reference signal SL CSI-RS, and the index of the SL CSI-RS corresponds to a beam used by the third terminal to receive information from the second terminal.

Usually, if indexes of the two reference signals are different, it indicates that directions of beams respectively corresponding to the two reference signals are different. In other words, the first identification information and the second identification information indicate that reference signals used by the third terminal to separately receive the information from the first terminal and the information from the second terminal correspond to different beam directions.

For ease of description, in this specification, the beam used by the third terminal to receive the second information from the first terminal is referred to as a second beam. In an example, for a manner of determining the second beam between the third terminal and the second terminal, refer to a manner of determining receive and transmit beams between the network device and the UE shown in FIG. 7, or another beam determining manner may be used. A manner of determining a communication beam between terminals is not limited in this specification.

In this embodiment of this application, the excluding, by the first terminal, a time-frequency resource corresponding to a slot corresponding to the first transmission resource in the first candidate resource set may specifically include: excluding, by the first terminal from the first candidate resource set, all time-frequency resources corresponding to a target slot, where the target slot includes all slots corresponding to the first transmission resource. The first transmission resource corresponds to one or more slots. For example, if the first transmission resource includes N retransmission resources and M periodic transmission resources, the slots corresponding to the first transmission resource include N slots corresponding to the N retransmission resources and one or more non-repeated slots in the M slots corresponding to the M periodic transmission resources.

Specifically, if the following condition 1 is met, the first terminal needs to exclude the time-frequency resource of the slot in which the first transmission resource indicated by the second terminal is located. The condition 1 is as follows: Both destination ends for sending information by the first terminal and the second terminal are the third terminal, and beams used by the third terminal to separately receive the information from the first terminal and the second terminal are different. It should be noted that there may be one or more second terminals that meet the condition 1. When excluding a conflict resource, the first terminal needs to exclude a time-frequency resource of a slot in which a first transmission resource indicated by each second terminal that meets the condition 1 is located.

In some possible implementations, corresponding to different manners in which the first terminal stores the first information in step S1202, manners in which the first terminal determines the first transmission resource are also different.

In an example, if the first terminal stores the first information based on the foregoing manner 1, the foregoing step S1204 specifically includes: determining, by the first terminal based on the first association information, identification information (for example, the first identification information) of the reference signal corresponding to the identification information of the third terminal, and determining whether the first identification information is the same as the second identification information. When determining that the first identification information is different from the second identification information, the first terminal determines the first transmission resource based on the first association information and the first identification information.

For example, if the first terminal is UE2b, the second terminal is UE2a, the third terminal is UE1, the second identification information is 1, and the first association information is shown in Table 4, UE2b determines, based on Table 4, that identification information of a reference signal corresponding to UE1 includes '2 (UE1<-UE2a)' and '1 (UE1<-UE3)'. '2(UE1<--UE2a)' is different from the second identification information, and then the UE2b determines, based on '2(UE1<--UE2a)', that the first transmission resource is 'transmission resource 1 & transmission resource 2'.

In another example, if the first terminal stores the first information based on the foregoing manner 2, step S1204 specifically includes: determining, by the first terminal based on the second association information, identification information (for example, the first identification information) of the reference signal corresponding to the identification information of the third terminal and identification information (for example, the fifth identification information) of the transmitting terminal, and determining whether the first identification information is the same as the second identification information. when determining that the first identification information is different from the second identification information, determining, by the first terminal based on the fifth identification information from a resource pool shared by the first terminal and the second terminal, the first transmission resource corresponding to the identification information of the second terminal.

For example, if the first terminal is UE2b, the second terminal is UE2a, the third terminal is UE1, the second identification information is 1, and the second association information is shown in Table 5, UE2b determines, based on Table 5, that identification information of a reference signal corresponding to UE1 includes '2 (UE1<-UE2a)' and '1 (UE1<-UE3)'. '2(UE1<-UE2a)' is different from the second identification information. Then, the UE2b determines, based on the second association information, that an SRC ID corresponding to '2(UE1<-UE2a)' is '32(UE2a)', and then determines the first transmission resource based on '32(UE2a)' and a corresponding resource pool.

If the first terminal stores the first information in the manner 3, a specific execution process of step S1204 is similar to a specific execution process of step S1204 in a case in which the first terminal stores the first information in the manner 2, and details are not described herein again.

S1205: The first terminal sends second information to the third terminal based on the excluded candidate resource set.

Correspondingly, the third terminal receives the second information.

In some possible implementations, the second information includes fourth identification information, and the fourth identification information indicates that a receiving end of the second information is the third terminal. The fourth identification information and the third identification information (the third identification information is identification information corresponding to the third terminal included in the first information) may be the same or may be different. That is, identification information corresponding to the third terminal in different communication links established between the third terminal and different other terminals may be the same or may be different, which is not limited in this specification.

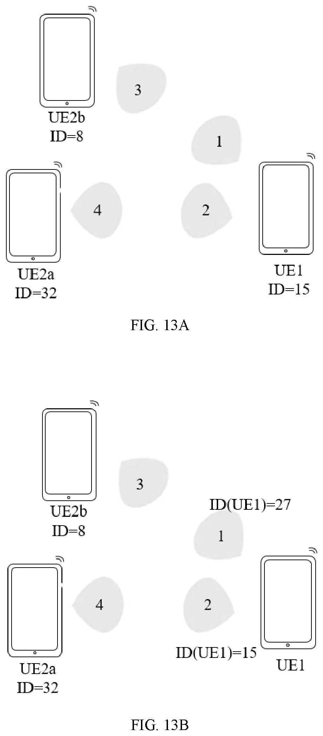

In an example, as shown in FIG. 13A, in a communication link established between UE2b (a first terminal) and UE1 (a third terminal), an ID corresponding to the UE2b is 8, identity information of receive and transmit beams used by the UE2b is 3, and identity information of receive and transmit beams used by the UE1 is 1. In the communication link established between the UE2a (the second terminal) and the UE1, an ID corresponding to the UE2a is 32, identity information of transmit and receive beams used by the UE2a is 4, identity information of transmit and receive beams used by the UE1 is 2, and in two communication links established between the UE1 and the UE2a and between the UE1 and the UE2b, identity information corresponding to the UE1 is 15.

In another example, as shown in FIG. 13B, in a communication link established between UE2b (a first terminal) and UE1 (a third terminal), an ID corresponding to the UE2b is 8, an ID corresponding to the UE1 is 15, identity information of receive and transmit beams used by the UE2b is 3, and identity information of receive and transmit beams used by the UE1 is 1. In the communication link established between the UE2a (the second terminal) and the UE1, an ID corresponding to the UE2a is 32, an ID corresponding to the UE1 is 27, identity information of transmit and receive beams used by the UE2a is 4, and identity information of transmit and receive beams used by the UE1 is 2. That is, in the two communication links respectively established between the UE1 and the UE2a and between the UE1 and the UE2b, identification information corresponding to the UE1 is different, and is 27 and 15 respectively.

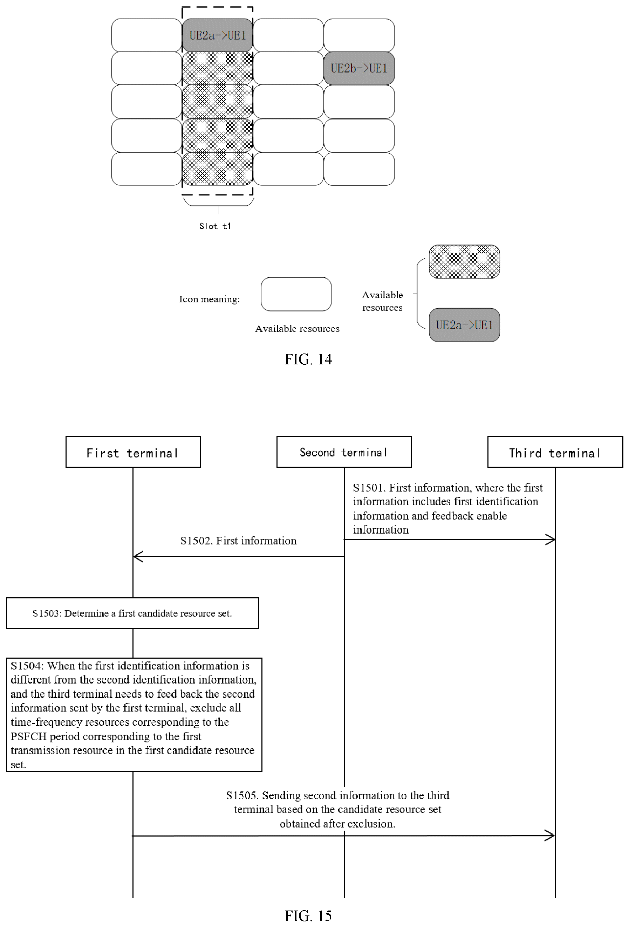

In an example, if the first transmission resource indicated by the UE2a is a transmission resource corresponding to a gray box marked (UE2a->UE1) in FIG. 14, and a slot corresponding to the first transmission resource is a slot t1, the UE2a excludes, from the first candidate resource set, all time-frequency resources corresponding to the slot t1, to obtain an excluded candidate resource set, and selects an available transmission resource from the excluded candidate resource set to send the second information to the third terminal.

In some possible implementations, the second information further includes seventh identification information, and the seventh identification information indicates that a transmitting end of the second information is the first terminal.

In some possible implementations, before performing step S1201, the first terminal receives third information from the third terminal, where the third information is used to indicate all identification information of the third terminal. For example, the third information includes the third identification information and the fourth identification information.

As an example, the third terminal, the second terminal, and the first terminal synchronize all identification information corresponding to their own devices to other terminals. For example, the third terminal synchronizes all identifiers corresponding to a device of the third terminal to the second terminal and the third terminal. Therefore, when selecting a transmission resource based on the communication method provided in this application, the terminal may determine, without omission, related information of another terminal whose communication destination end is the same as that of the terminal. The related information may include but is not limited to one or more of identification information of the terminal, identification information of a reference signal corresponding to a corresponding receiving terminal, and transmission resource information.

In this embodiment of this application, the sending, by the first terminal, second information to a third terminal based on the excluded candidate resource set may specifically include: selecting, by the first terminal, a second transmission resource from an available resource in the excluded candidate resource set, and sending the second information to the third terminal based on the second transmission resource. The second transmission resource includes a transmission resource that needs to be used to send the second information this time.

In some other possible implementations, the second transmission resource may further include a reserved resource requested by the first terminal from the third terminal, and the reserved resource includes a retransmission resource and/or a periodic transmission resource. In this implementation, correspondingly, the second information may further include indication information indicating the reserved resource.

For a specific communication bearer manner of the second information, refer to related descriptions of the specific communication bearer manner of the first information in step S1201. Details are not described herein again.

The following describes in detail several possible implementations of S1205 with reference to related descriptions of step 1 to step 9 in the resource selection procedure related to FIG. 6.

In an example, the first candidate resource set determined by the first terminal in step S1203 is a resource set in units of one slot and L contiguous subchannels. Before step S1205, the communication method further includes: using, by the first terminal, the first candidate resource set as A in step 1, continuing to support step 2 and step 3, and performing step S1204 based on A obtained in step 3, to obtain an excluded candidate resource set. Step S1205 specifically includes: using, by the first terminal, the excluded candidate resource set as A, and continuing to perform step 5 to step 9, where the first terminal selects the second transmission resource from obtained in step 9, sends the second information to the third terminal based on a transmission resource that needs to be used to send the second information this time in the second transmission resource, and indicates, in the second information, a reserved resource that is requested by the first terminal from the third terminal and that is included in the second transmission resource, to complete a communication process.

In another example, the first candidate resource set determined by the first terminal in step S1203 is a candidate resource set obtained after step 7 is performed. In this case, step S1205 specifically includes: selecting the second transmission resource from the excluded available resource in the candidate resource set. In addition, after step S1205, step 8 and step 9 continue to be performed to complete a communication process.

According to the communication method provided in this application, the excluded candidate resource set obtained by the first terminal does not include a transmission resource that belongs to a same slot as the first transmission resource, and the first terminal selects any available resource from the excluded candidate resource set to send the second information to the third terminal, so that the first terminal and the second terminal can send information to the third terminal in a same slot, a probability of a receiving conflict that is generated because the third terminal cannot separately receive information from the first terminal and the second terminal in different beam directions in the same slot, thereby effectively improving reliability of communication between terminals in sidelink communication.

This application further provides another resource exclusion method. In this implementation, in a communication link established by a third terminal with another terminal (for example, a first terminal or a second terminal), a receive beam and a transmit beam used by the third terminal are the same.

Specifically, as shown in FIG. 15, a communication manner includes:

S1501: The second terminal sends first information, where the first information includes first identification information and feedback enabling information. A transmitting end of the first information is the second terminal, and a destination end of the first information is the third terminal. Correspondingly, the third terminal receives the first information.

In this embodiment of this application, the feedback enabling information indicates that the third terminal needs to feed back the first information sent by the second terminal.

S1502: The first terminal receives the first information from the second terminal.

S1503: The first terminal determines a first candidate resource set.

For descriptions of steps S1501 to S1503, refer to related descriptions of the foregoing steps S1201 to S1203. Details are not described herein again.

S1504: When the first identification information is different from second identification information, and the third terminal needs to feed back second information sent by the first terminal, the first terminal excludes, from the first candidate resource set, all time-frequency resources corresponding to a physical sidelink feedback channel (PSFCH) period corresponding to a first transmission resource.

For detailed descriptions of the first identification information, the second identification information, the first candidate resource set, and the first transmission resource, refer to related descriptions in other parts of this specification, for example, the foregoing step S1204. Details are not described herein again.

In this embodiment of this application, the feedback enabling information included in the first information is carried in control information in a PSSCH.

In an example, if determining that the second information also needs to include the feedback enabling information, the first terminal determines that the third terminal needs to feed back the second information sent by the first terminal.

In this implementation, the PSFCH period corresponding to the first transmission resource is a PSFCH period resource that needs to be used by the third terminal to send corresponding feedback information to the second terminal in response to the HARQ-ACK feedback enabling information carried in the first information when the second terminal sends the first information to the third terminal on the first transmission resource.

All time-frequency resources corresponding to the PSFCH period corresponding to the first transmission resource are all time-frequency resources corresponding to a PSSCH bundling window length corresponding to the PSFCH period corresponding to the first transmission resource.

It may be understood that a quantity of slots included in the PSSCH bundling window length is related to the following two parameters: each SL slot has one PSFCH feedback slot and one PSSCH feedback time interval. For descriptions of and K, refer to the foregoing related descriptions, for example, the related descriptions in FIG. 5. Details are not described herein again.

Specifically, when the following condition 2 is met, the first terminal needs to exclude a time-frequency resource of a slot in which the first transmission resource indicated by the second terminal is located. The condition 2 is that both destination ends for sending information by the first terminal and the second terminal are the third terminal, and beams used by the third terminal to separately receive the information from the first terminal and the second terminal are different. It should be noted that there may be one or more second terminals that meet the condition 1. When excluding a conflicting resource, the first terminal needs to exclude a time-frequency resource in a slot in which a first transmission resource corresponding to each second terminal that meets the condition 1 is located.

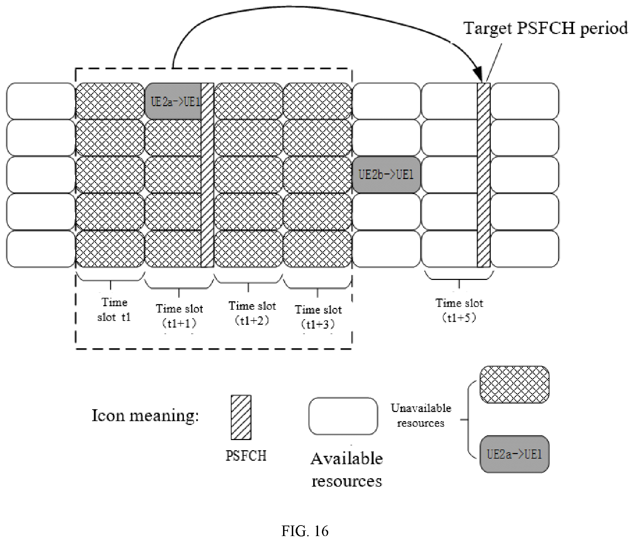

In an example, as shown in FIG. 16, an example in which there is one PSFCH feedback slot in every four slots and a PSSCH feedback time interval is 2 is used to show a schematic diagram in which the first terminal excludes all time-frequency resources corresponding to a PSFCH period corresponding to a first transmission resource.

In FIG. 16, the first transmission resource is a transmission resource corresponding to a gray box identified (UE2a->UE1), a PSFCH period corresponding to the first transmission resource is a target PSFCH period indicated in FIG. 16, and all time-frequency resources corresponding to the target PSFCH period include all time-frequency resources corresponding to the slot t1, the slot (t1+1), the slot (t1+2), and the slot (t1+3). (marked by a dashed box in FIG. 15). The first terminal excludes, from the first candidate resource set, all the time-frequency resources corresponding to the slot (t1+1), the slot (t1+2), and the slot (t1+3), to obtain the excluded candidate resource set. It may be understood that, all time-frequency resources corresponding to a PSFCH period corresponding to a first transmission resource in the first candidate resource set that are excluded by the first terminal may include a time-frequency resource corresponding to a slot t1 shown in FIG. 14.

In this communication manner, the excluded candidate resource set obtained by the first terminal does not include a transmission resource that belongs to a same slot as a slot corresponding to the PSFCH period corresponding to the first transmission resource, and the first terminal selects any available resource from the excluded candidate resource set to send the second information to the third terminal, so that a PSSCH bundling window length corresponding to a same PSFCH period by the first terminal and the second terminal can be reduced to send information to the third terminal, a probability of a sending conflict caused because the third terminal cannot separately send feedback to the first terminal and the second terminal based on reference signals in different beam directions in the PSFCH period, thereby effectively improving reliability of communication between terminals in sidelink communication.

S1505: The first terminal sends the second information to the third terminal based on the excluded candidate resource set.

For descriptions of S1505, refer to related descriptions of the foregoing step S1205. Details are not described herein again.

In an implementation provided in this application, for a same second terminal, when determining that a third terminal does not need to feed back information from the first terminal or the second terminal, the first terminal performs step S1205, to exclude a transmission resource that is in the first candidate resource set and that conflicts with a transmission resource indicated by the second terminal. When determining that both the third terminal and the second terminal need to feed back information from the first terminal and the second terminal, the first terminal performs step S1206 to exclude a transmission resource that is in the first candidate resource set and that conflicts with a transmission resource indicated by the second terminal.

However, for a plurality of different second terminals, because the third terminal may need to feed back information from a part of the plurality of second terminals, but does not need to feed back information from a remaining part of the second terminals, correspondingly, the first terminal excludes a transmission resource that conflicts with transmission resources respectively indicated by the plurality of second terminals from the first candidate resource set, and related exclusion tasks include the following two exclusion tasks. 1) One of the exclusion tasks: The first terminal excludes, by performing step S1205, all transmission resources that are in the first candidate resource set and that are corresponding to all slots corresponding to the transmission resources respectively indicated by the part of second terminals. 2) Another exclusion task: The first terminal excludes, by performing step S1206, all transmission resources that are in the first candidate resource set and that are corresponding to all PSFCH periods corresponding to transmission resources respectively indicated by the remaining part of the second terminal. After completing the two exclusion tasks, the first terminal obtains the excluded candidate resource set, and sends the corresponding second information to the third terminal based on the excluded candidate resource set.

It should be noted that before step S1201 (the second terminal sends the first information), the second terminal also performs a task related to resource selection, to determine a third transmission resource, and sends the first information (to the third terminal) based on the third transmission resource. The method may specifically include: determining, by the first terminal, a second candidate resource set, and determining a third transmission resource from the second candidate resource set, where the third transmission resource includes a transmission resource used by the second terminal to send the first information to the third terminal this time and the first transmission resource.

In an example, the second candidate resource set may be a transmission resource set in units of one slot and L contiguous subchannels. For details about how the second terminal determines the second candidate resource set, refer to a communication protocol standard. Details are not described herein. For example, refer to related descriptions of determining the candidate resource set by the UE in the foregoing step (corresponding to step 1) of performing a resource selection procedure by the UE described in FIG. 6.

In an example, after determining the second candidate resource set, similar to step S1205, the second terminal may further exclude a time-frequency resource corresponding to a slot corresponding to a target transmission resource in the second candidate resource set, where the target transmission resource includes a reserved resource requested by the destination end for another terminal of the third terminal from the third terminal, to obtain the excluded second candidate resource set, and select the third transmission resource based on the excluded second candidate resource set.

In another example, after determining the second candidate resource set, similar to step S1206, after determining the second candidate resource set, the second terminal excludes, when determining that the first information needs to carry the feedback enabling information, the time-frequency resource corresponding to the slot corresponding to the first target transmission resource in the second candidate resource set, and excludes the time-frequency resource corresponding to the PSFCH period corresponding to the second target transmission resource in the second candidate resource set. The first target transmission resource includes a reserved resource requested by the first another terminal from the third terminal, and the first another terminal includes another terminal whose communication destination end is the third terminal. The second target transmission resource includes a reserved resource requested by the second another terminal from the third terminal, the second another terminal includes a communication destination end being the third terminal, and the third terminal needs to feed back to the another terminal, to obtain an excluded second candidate resource set, and the third transmission resource is selected based on the excluded second candidate resource set.

In some possible implementations, the first information received by the first terminal in the foregoing step S1202 may alternatively be from the third terminal. In an example, after receiving the first request message sent by the first terminal, when determining that the second terminal meets the condition 1, the third terminal sends the first information to the first terminal in response to the first request message, where the first request message is used to request to obtain reference signal identification information of a receive beam used by the third terminal in communication established between the third terminal and another terminal other than the first terminal, and a corresponding first transmission resource and/or identification information of a corresponding transmitting terminal. Alternatively, the first request message is used to request to obtain one or more pieces of reference signal identification information that are in reference signal identification information of a receive beam used by the third terminal and that are different from the second identification information in communication established between the third terminal and another terminal other than the first terminal, and first transmission resources and/or identification information of transmitting terminals respectively corresponding to the one or more pieces of reference signal identification information.

It should be noted that, in the implementation related to FIG. 15 provided in this application, a premise that a same terminal uses same transmit and receive beams in a same communication link is used for description. Based on the communication method shown in FIG. 15, a communication instability problem caused by the conflict 2 is effectively resolved. However, this does not mean that when a same terminal uses different transmit and receive beams in one communication link, a problem of communication instability caused by the conflict 2 does not exist. Actually, in this case in which transmit and receive beams are different, a problem of communication instability caused by the conflict 2 also exists.

In view of this, this application further provides another communication solution, so that when a same terminal uses different transmit and receive beams in one communication link, a problem of communication instability caused by the conflict 2 is effectively resolved.

Specifically, in the communication solution, when selecting a related transmission resource that needs to be used for communication with a third terminal, and when determining that a communication destination terminal of a second terminal is also the third terminal, a beam used by the third terminal to send information to the second terminal is different from a beam used by the third terminal to send information to the first terminal, and the third terminal needs to feed back information from the second terminal and the first terminal, the first terminal excludes, from a candidate resource set, all time-frequency resources in a PSSCH bundling window length corresponding to a PSFCH period corresponding to a first transmission resource indicated by the second terminal, and selects, based on an excluded candidate resource set, a reserved resource that needs to be used for communication with the third terminal.

In an example, the communication solution may sequentially include the foregoing steps S1501 to S1503, the following step S1507, and the foregoing step S1505. The first information including the first identification information in step S1501 is replaced with the following: The first information includes the eighth identification information and the feedback enabling information. The eighth identification information is used to indicate a transmit beam used by the third terminal to send information to the second terminal, and the feedback enabling information is used to indicate that the third terminal needs to feed back the first information sent by the second terminal.

S1507: When the eighth identification information is different from ninth identification information, and the third terminal needs to feed back second information sent by the first terminal, exclude, from the first candidate resource set, all time-frequency resources corresponding to a physical sidelink feedback channel (PSFCH) period corresponding to a first transmission resource.

The ninth identification information is a transmit beam used by the third terminal to send information to the first terminal.

In this way, a probability of occurrence of the conflict 2 when a same terminal uses different transmit and receive beams in one communication link can be effectively reduced, so that reliability of communication between terminals in sidelink communication is effectively improved.

In this application, "sending information to... (for example, the third terminal)" or a related illustration in the accompanying drawings may be understood as that a destination terminal of the information is the third terminal, and may include directly or indirectly sending the information to the third terminal. "Receiving, from... (for example, the third terminal), information", or "receiving information from... (for example, the third terminal)", or a related illustration in the accompanying drawings may be understood as that a source terminal of the information is the third terminal, and may include directly or indirectly receiving the information from the third terminal. Necessary processing, for example, a format change, may be performed on the information between the source terminal and the destination terminal to which the information is sent, but the destination terminal can understand valid information from the source terminal. A similar expression in this application may be understood similarly, and details are not described herein again.

It may be understood that, in this application, example descriptions are given by using an example in which the terminal serves as an execution body of an interaction example, but the execution body of the interaction example is not limited in this application. For example, the terminal in the method provided in this application may alternatively be a communication apparatus, a chip, a chip system, or a processor used in the terminal, or may be a logical node, a logical module, or software that can implement all or some functions of the terminal.

It may be understood that, in the foregoing embodiments, the methods and/or steps implemented by the terminal may alternatively be implemented by a component (for example, a chip or a circuit) that can be used in the terminal.

The foregoing mainly describes the solutions provided in embodiments of this application from a perspective of interaction between terminals. Correspondingly, an embodiment of this application further provides a communication apparatus, and the communication apparatus is configured to implement the foregoing methods. The communication apparatus may be the terminal in the foregoing method embodiments, or may be a component that can be used in the terminal. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules according to the foregoing method embodiments. For example, each functional module may be obtained through division based on each corresponding function, or two or more functions may be integrated into one processing unit. The integrated module may be implemented in a form of hardware, or may be implemented in a form of a software functional module. It should be noted that, in embodiments of this application, module division is an example, and is merely a logical function division. In actual implementation, another division manner may be used.

Based on a same concept of the foregoing communication method, this application further provides the following communication apparatus:

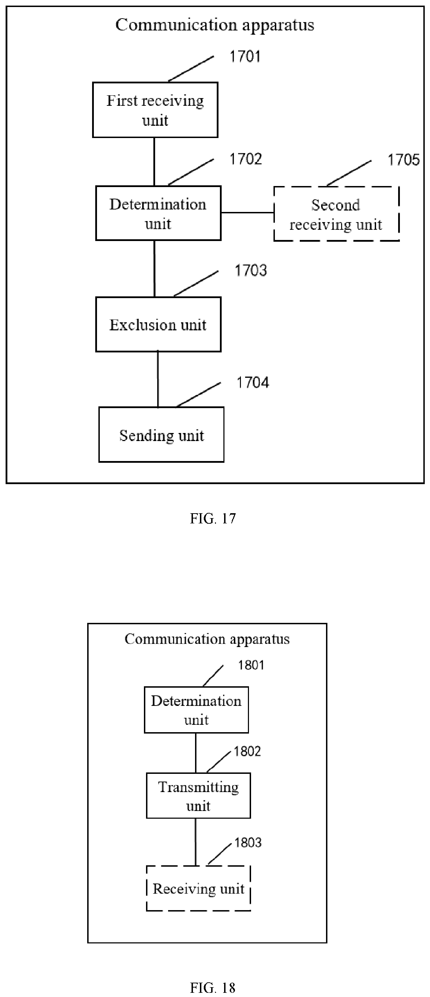

FIG. 17 is a diagram of a structure of a communication apparatus according to an embodiment of this application. The communication apparatus is used in a first terminal, and the communication apparatus includes:
a first receiving unit 1701, configured to receive first information, where the first information includes first identification information, and the first identification information indicates a beam used by a third terminal to receive the first information from a second terminal;
a determining unit 1702, configured to determine a first candidate resource set;
an exclusion unit 1703, configured to: when the first identification information is different from second identification information, exclude, from the first candidate resource set, a time-frequency resource corresponding to a slot corresponding to a first transmission resource, to obtain an excluded candidate resource set, where the second identification information is a beam used by the third terminal to receive second information from a first terminal, and the first transmission resource is a time-frequency resource indicated by the second terminal in the first information; and
a sending unit 1704, configured to send the second information to the third terminal based on the excluded candidate resource set.

In some possible implementations, the first identification information indicates an index of a sidelink channel state information reference signal SL CSI-RS, and the index of the SL CSI-RS corresponds to the beam used by the third terminal to receive the first information from the second terminal.

In some possible implementations, the first information further includes third identification information, the third identification information indicates that a receiving end of the first information is the third terminal, the second information includes fourth identification information, and the fourth identification information indicates that a receiving end of the second information is the third terminal, where the third identification information is the same as or different from the fourth identification information.

In some possible implementations, the first information further includes fifth identification information, and the fifth identification information indicates that a transmitting end of the first information is the second terminal.

In some possible implementations, the communication apparatus further includes: a second receiving unit 1705, configured to receive third information from the third terminal, where the third information includes the third identification information and the fourth identification information, and the third information indicates all identification information of the third terminal.

In some possible implementations, the first information further includes feedback enabling information, the feedback enabling information indicates that the third terminal needs to feed back the first information sent by the second terminal, and the exclusion unit 1703 is specifically configured to: when the third terminal needs to feed back the second information sent by the first terminal, exclude, from the first candidate resource set, all time-frequency resources corresponding to a physical sidelink feedback channel PSFCH period in which the first transmission resource is located.

In some possible implementations, the second information is carried in sidelink control information and/or a medium access control control element.

FIG. 18 is a diagram of a structure of another communication apparatus according to an embodiment of this application. The communication apparatus is used in a second terminal, and the communication apparatus includes:
a determining unit 1801, configured to: determine a second candidate resource set, and determine a third transmission resource from the second candidate resource set; and
a sending unit 1802, configured to send first information to a third terminal based on the third transmission resource, where the first information includes first identification information, and the first identification information indicates a beam used by the third terminal to receive the first information from a second terminal.

In some possible implementations, the communication apparatus further includes: a receiving unit 1803, configured to receive third information from the third terminal, where the third information includes the third identification information corresponding to the third terminal and fourth identification information corresponding to the third terminal, the third information indicate all identification information of the third terminal, and the third identification information is the same as or different from the fourth identification information.

It should be noted that, for steps or functions specifically performed by the apparatuses in FIG. 17 and FIG. 18, refer to related descriptions in the foregoing communication method. Details are not described herein again.

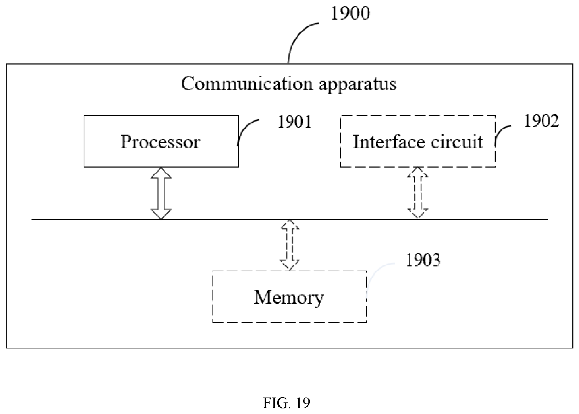

FIG. 19 is a diagram of a structure of another communication apparatus according to an embodiment of this application. The communication apparatus 1900 includes one or more processors 1901 (one processor is used as an example in the figure). Optionally, the communication apparatus 1900 may further include a memory 1903 (represented by dashed lines in the figure). The memory 1903 is configured to store instructions executed by the processor 1901, store input data needed by the processor 1901 to run the instructions, or store data generated by running the instructions by the processor 1901. Optionally, the communication apparatus 1900 may further include an interface circuit 1902 (represented by dashed lines in the figure), and the processor 1901 and the interface circuit 1902 are coupled to each other. It may be understood that, the interface circuit 1902 may be a transceiver or an input/output interface.

In some possible implementations, the processor 1901 may be configured to implement steps or functions performed by one or more of the determining unit 1702, the exclusion unit 1703, and the determining unit 1801, and the interface circuit 1902 may be configured to implement steps or functions performed by one or more of the first receiving unit 1701, the sending unit 1704, the second receiving unit 1705, and the receiving unit 1803.

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is caused to perform the method in the foregoing embodiments.

This application further provides a computer program, and the computer program is used to implement the method in the foregoing embodiments.

This application further provides a communication apparatus, including a processor. The processor is configured to perform the method in the foregoing embodiments.

This application further provides a communication system, including a first communication apparatus (for example, a first terminal), a second communication apparatus (for example, a second terminal), and a third communication apparatus (for example, a third terminal). The first communication apparatus may be configured to perform the steps performed by the first terminal in the methods in the foregoing embodiments. The second communication apparatus may be configured to perform the steps performed by the second terminal in the methods in the foregoing embodiments. The third communication apparatus may be configured to perform the steps performed by the third terminal in the methods in the foregoing embodiments.

An embodiment of this application further provides a circuit. The circuit is coupled to a memory, and the circuit is configured to perform the method shown in the foregoing embodiments. The circuit may include a chip circuit.

It should be noted that one or more of the foregoing units or units may be implemented by software, hardware, or a combination of software and hardware. When any one of the foregoing units or units is implemented by software, the software exists in a form of computer program instructions, and is stored in a memory. A processor may be configured to: execute the program instructions and implement the foregoing method procedures.

In this application, the processor may be a general-purpose processor, a digital signal processor, an application-specific integrated circuit, a field programmable gate array or another programmable logic device, a discrete gate or a transistor logic device, a discrete hardware component, or all or some of circuits in the foregoing device that are configured to implement a processing function, and may implement or perform the methods, steps, and logical block diagrams disclosed in this application. The general purpose processor may be a microprocessor or any conventional processor or the like. The steps of the methods disclosed with reference to this application may be directly implemented by a hardware processor, or may be implemented by a combination of hardware and a software module in a processor.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a programmable logic device (programmable logic device, PLD), a dedicated digital circuit, a hardware accelerator, or a non-integrated discrete device. The hardware may run necessary software or do not depend on software to perform the foregoing method procedures.

Optionally, an embodiment of this application further provides a chip system, including at least one processor and an interface. The at least one processor is coupled to a memory over the interface. When the at least one processor runs a computer program or instructions in the memory, the chip system is caused to perform the method in any one of the foregoing method embodiments. Optionally, the chip system may include a chip, or may include a chip and another discrete device. This is not specifically limited in this embodiment of this application.

Alternatively, the memory in this application may be a circuit or any other apparatus that can implement a storage function, and is configured to store program instructions and/or data. The memory is any other medium that can carry or store expected program code in a form of an instruction or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state drive (solid-state drive, SSD), or the memory may be a volatile memory (volatile memory), for example, a random-access memory (random-access memory, RAM).

It should be understood that, unless otherwise specified, "/" in descriptions of this application indicates an "or" relationship between associated objects. For example, A/B may indicate A or B, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe technical solutions in embodiments of this application, words such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The "embodiment" mentioned in this specification means that specific features, structures, or characteristics described with reference to the embodiment may be included in one or more embodiments of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

In this application, examples may be mutually referenced on the premise that no logical conflict exists. For example, methods and/or terms in method embodiments may be mutually referenced, functions and/or terms in apparatus embodiments may be mutually referenced, and functions and/or terms in apparatus examples and method examples may be mutually referenced.

## Claims

1. A communication method, wherein the method comprises:
receiving first information, wherein the first information comprises first identification information, and the first identification information indicates a beam used by a third terminal to receive the first information from a second terminal;
determining a first candidate resource set;
when the first identification information is different from second identification information, excluding, from the first candidate resource set, a time-frequency resource corresponding to a slot corresponding to a first transmission resource, to obtain an excluded candidate resource set, wherein the second identification information is a beam used by the third terminal to receive second information from a first terminal, and the first transmission resource is a time-frequency resource indicated by the second terminal in the first information; and
sending the second information to the third terminal based on the excluded candidate resource set.

2. The method according to claim 1, wherein the first identification information indicates an index of a sidelink channel state information reference signal SL CSI-RS, and the index of the SL CSI-RS corresponds to the beam used by the third terminal to receive the first information from the second terminal.

3. The method according to claim 1 or 2, wherein the first information further comprises third identification information, the third identification information indicates that a destination end of the first information is the third terminal, the second information comprises fourth identification information, and the fourth identification information indicates that a destination end of the second information is the third terminal, wherein
the third identification information is the same as or different from the fourth identification information.

4. The method according to any one of claims 1 to 3, wherein the first information further comprises fifth identification information, and the fifth identification information indicates that a transmitting end of the first information is the second terminal.

5. The method according to any one of claims 1 to 4, wherein before the excluding, from the first candidate resource set, the time-frequency resource corresponding to the slot corresponding to the first transmission resource, the method further comprises:
receiving third information from the third terminal, wherein the third information comprises the third identification information and the fourth identification information, and the third information indicates all identification information of the third terminal.

6. The method according to any one of claims 1 to 5, wherein the first information further comprises feedback enabling information, the feedback enabling information indicates that the third terminal needs to feed back the first information sent by the second terminal, and the excluding, from the first candidate resource set, the time-frequency resource corresponding to the slot corresponding to the first transmission resource, to obtain the excluded candidate resource set comprises:
when the third terminal needs to feed back the second information sent by the first terminal, excluding, from the first candidate resource set, all time-frequency resources corresponding to a physical sidelink feedback channel PSFCH period corresponding to the first transmission resource, to obtain the excluded candidate resource set.

7. The method according to any one of claims 1 to 6, wherein one or more pieces of information comprised in the first information are carried in sidelink control information SCI and/or a medium access control control element MAC CE.

8. A communication method, wherein the method comprises:
determining a second candidate resource set, and determining a third transmission resource from the second candidate resource set; and
sending first information to a third terminal based on the third transmission resource, wherein the first information comprises first identification information, and the first identification information indicates a beam used by the third terminal to receive the first information from a second terminal.

9. A communication apparatus, wherein the communication apparatus comprises:
a first receiving unit, configured to receive first information, wherein the first information comprises first identification information, and the first identification information indicates a beam used by a third terminal to receive the first information from a second terminal;
a determining unit, configured to determine a first candidate resource set;
an exclusion unit, configured to: when the first identification information is different from second identification information, exclude, from the first candidate resource set, a time-frequency resource corresponding to a slot corresponding to a first transmission resource, to obtain an excluded candidate resource set, wherein the second identification information is a beam used by the third terminal to receive second information from a first terminal, and the first transmission resource is a time-frequency resource indicated by the second terminal in the first information; and
a sending unit, configured to send the second information to the third terminal based on the excluded candidate resource set.

10. The apparatus according to claim 9, wherein the first identification information indicates an index of a sidelink channel state information reference signal SL CSI-RS, and the index of the SL CSI-RS corresponds to the beam used by the third terminal to receive the first information from the second terminal.

11. The apparatus according to claim 9 or 10, wherein the first information further comprises third identification information, the third identification information indicates that a receiving end of the first information is the third terminal, the second information comprises fourth identification information, and the fourth identification information indicates that a receiving end of the second information is the third terminal, wherein
the third identification information is the same as or different from the fourth identification information.

12. The apparatus according to any one of claims 9 to 11, wherein the first information further comprises fifth identification information, and the fifth identification information indicates that a transmitting end of the first information is the second terminal.

13. The apparatus according to any one of claims 9 to 12, wherein the communication apparatus further comprises:
a second receiving unit, configured to receive third information from the third terminal, wherein the third information comprises the third identification information and the fourth identification information, and the third information indicates all identification information of the third terminal.

14. The apparatus according to any one of claims 9 to 13, wherein the first information further comprises feedback enabling information, and the feedback enabling information indicates that the third terminal needs to feed back the first information sent by the second terminal; and
the exclusion unit is specifically configured to: when the third terminal needs to feed back the second information sent by the first terminal, exclude, from the first candidate resource set, all time-frequency resources corresponding to a physical sidelink feedback channel PSFCH period in which the first transmission resource is located.

15. The apparatus according to any one of claims 9 to 14, wherein the second information is carried in sidelink control information and/or a medium access control control element.

16. A communication apparatus, wherein the communication apparatus comprises:
a determining unit, configured to: determine a second candidate resource set, and determine a third transmission resource from the second candidate resource set; and
a sending unit, configured to send first information to a third terminal based on the third transmission resource, wherein the first information comprises first identification information, and the first identification information indicates a beam used by the third terminal to receive the first information from a second terminal.

17. A communication apparatus, comprising a processor, wherein the processor is configured to read and execute a computer program stored in a memory, to implement the method according to any one of claims 1 to 8.

18. A computer-readable storage medium, wherein the computer-readable storage medium is configured to store a computer program, and when the computer program is executed, the method according to any one of claims 1 to 8 is performed.

19. A computer program, wherein when the computer program is executed, the method according to any one of claims 1 to 8 is performed.
